# EUROPÄISCHE PATENTSCHRIFT

(11) **EP 4 052 612 B1**
(45) Veröffentlichungstag und Bekanntmachung des Hinweises auf die Patenterteilung: **31.12.2025**
(21) Anmeldenummer: 21217855.2
(22) Anmeldetag: 06.11.2019
(51) Int. Cl.: A47B 13/08, A47B 96/20

(54) **KANTENLEISTE UND VERFAHREN ZU IHRER HERSTELLUNG**
EDGE STRIP AND METHOD FOR THE PRODUCTION THEREOF
BAGUETTE DE BORDURE ET SON PROCÉDÉ DE FABRICATION

(30) Priorität: 06.11.2018 DE 102018127657
(43) Veröffentlichungstag der Anmeldung: 07.09.2022
(62) Teilanmeldung aus: 19207530.7
(73) Patentinhaber: Fritz Egger GmbH & Co. OG, 6380 St. Johann in Tirol (AT)
(72) Erfinder: Streichardt, Thomas, 48231 Warendorf (DE)
(74) Vertreter: Cohausz & Florack

(56) Entgegenhaltungen:
- EP-B1- 1 990 206
- WO-A1-2017/223171
- ES-U- 1 033 421
- JP-A- H04 278 338
- JP-B2- 2 976 005

## Beschreibung

Die vorliegende Erfindung betrifft eine Kantenleiste für Möbelstücke umfassend einen Grundkörper mit einer an ein Möbelstück anlegbaren Unterseite und einer von der Unterseite abgewandten Oberseite, wobei die Oberseite zumindest einen zu einem Rand des Grundkörpers hin abfallenden Übergangsabschnitt aufweist.

Ferner betrifft die Erfindung ein Verfahren zur Herstellung einer erfindungsgemäßen Kantenleiste.

Aus dem Stand der Technik sind Kantenleisten bekannt, die einen Grundkörper mit einem zu einem Rand des Grundkörpers hin abfallenden Übergangsabschnitt aufweisen. Solche Kantenleisten werden üblicherweise an die Schmalseiten von Möbelplatten als dekorativer Abschluss angebracht. Durch den zum Rand des Grundkörpers hin abfallenden Übergangsabschnitt der Kantenleiste wird ein optisch ansprechenderer Übergang von der Kantenleiste zur Möbelplatte erzeugt als der Übergang von einer Kantenleiste ohne abfallenden Übergangsabschnitt.

Die WO 2009/053016 A1 und EP1990206A2 beschreiben jeweils eine gattungsgemäße Kantenleiste, bei der der Übergangsabschnitt zumindest abschnittsweise ein Dekor aufweist. Die Kantenleisten der WO 2009/053016 A1 sind bei der Herstellung bereits auf das Dickenmaß des Möbelstücks gefertigt, wodurch keine materialabtragende Nachbearbeitung der Schmalseite der Kantenleiste erforderlich ist. Durch das im abfallenden Übergangsabschnitt der Kantenleiste vorhandene Dekor soll ein verbesserter optischer Eindruck erzeugt werden. Die Herstellung der Kantenleiste gemäß der WO 2009/053016 A1 auf das Dickenmaß des Möbelstücks erschwert es allerdings, Dickenunterschiede innerhalb der Toleranzen von Möbelstücken wie Möbelplatten auszugleichen. Zudem ist für diese Kanten ein passgenaues Positionieren der Kante schwierig.

Dekore können auf verschiedene Art und Weise auf Kantenleisten aufgebracht werden. Beispielsweise kann ein Dekor durch Druckverfahren wie Digitaldruck, insbesondere Inkjet-Druck, oder Tiefdruck aufgebracht werden. Ein Dekor kann aber auch mittels einer bedruckten Folie oder mittels einer Transferfolie aufgebracht werden. Von den genannten Druckverfahren ist der Digitaldruck am flexibelsten, da nicht für jedes Dekor spezielle Druckwalzen benötigt werden, und nicht in einem gesonderten Verfahrensschritt eine Folie erstellt werden muss, die als Dekor oder von der das Dekor aufgebracht wird.

Während ein Dekor auf Kantenleisten ohne einen abfallenden Übergangsabschnitt mit den vorgenannten Verfahren aufgebracht werden kann, stellt das Aufbringen eines Dekors auf Kantenleisten mit einem zu einem Rand des Grundkörpers hin abfallenden Übergangsabschnitt größere technische Anforderungen.

So kann es bei kontaktbasierten Druckverfahren wie dem Tiefdruck schwierig sein, den Kontakt über die gesamte Fläche des abfallenden Übergangsabschnitts aufrecht zu erhalten. Bei Druckverfahren, die mit flüssigen Farben arbeiten wie der Tiefdruck oder der Inkjet-Druck, kann die Farbe im abfallenden Übergangsabschnitt verlaufen, was dazu führen kann, dass das Dekor im Übergangsabschnitt anders aussieht. Ferner kann das Dekor im Übergangsabschnitt ungleichmäßig aussehen, da die immer senkrechteren Flächen im Übergangsabschnitt relativ mit immer weniger Farbe in Kontakt kommen. Mit Hilfe von Folien kann ein Dekor auch auf einen abfallenden Übergangsabschnitt aufgebracht werden. Allerdings ist hier ein zusätzlicher Verfahrensschritt notwendig, in dem die Folie oder die Transferfolie mit dem Dekor oder dem zu übertragenden Dekor versehen wird, bevor das Dekor auf der Kantenleiste aufgebracht wird.

Aufgrund der Flexibilität des Digitaldrucks, insbesondere des Inkjet-Drucks, wäre es wünschenswert, diesen auch für das Aufbringen von Dekoren auf Kantenleisten mit einem zu einem Rand des Grundkörpers hin abfallenden Übergansabschnitt einsetzen zu können, wobei die Kantenleiste insgesamt einen ansprechenden optischen Eindruck aufweist.

Aufgabe der Erfindung war es somit, eine Kantenleiste mit einem zu einem Rand des Grundkörpers hin abfallenden Übergangsabschnitt bereitzustellen, die hinsichtlich des Aufbringens eines Dekors weiter verbessert ist. Eine weitere Aufgabe der Erfindung war es, eine Kantenleiste bereitzustellen, die hinsichtlich ihrer optischen Eigenschaften weiter verbessert ist.

Alle oder einige dieser Aufgaben werden gemäß einer Ausführungsform der vorliegenden Erfindung bei einer Kantenleiste nach Anspruch 1.

Erfindungsgemäß ist also vorgesehen, dass der Übergangsabschnitt stufenförmig zu einem Rand des Grundkörpers hin abfällt. Der Übergangsabschnitt weist dabei mindestens zwei Stufen mit jeweils einer oberseitigen und einer randseitigen Fläche pro Stufe auf.

Dabei verlaufen die oberseitigen Flächen vorzugsweise parallel oder geneigt zur Unterseite der Kantenleiste, so dass die kleinsten Winkel der oberseitigen Flächen bezüglich der Unterseite jeweils im Mittel von von -45° bis 75°, insbesondere -45° bis 45°, betragen. Ebenso sind vorzugsweise die randseitigen Flächen bezüglich der Unterseite so geneigt, dass die kleinsten Winkel der randseitigen Flächen bezüglich der Unterseite jeweils im Mittel von 20° bis weniger 90°, insbesondere von 46° bis weniger 90°, insbesondere bis 80°, betragen.

Dabei gilt der angegebene Winkelbereich jeweils für jede oberseitige Fläche einer Stufe. Ferner gilt der angegebene Winkelbereich jeweils für jede randseitige Fläche einer Stufe. Die oberseitigen Flächen können im angegebenen Winkelbereich alle denselben Winkel aufweisen oder jeweils unterschiedliche Winkel. Ebenso können die randseitigen Flächen im angegebenen Winkelbereich alle denselben Winkel aufweisen oder jeweils unterschiedliche Winkel.

Die Winkel der Flächen werden mit Bezug zu der ungekrümmten Ebene zwischen den die Unterseite des Grundkörpers definierenden Rändern gemessen.

Durch das Vorhandensein des Übergangsabschnitts wird ein optisch ansprechenderer Übergang von der Kantenleiste zum Möbelstück gewährleistet. Nun wurde weiter erkannt, dass die Stufenform des Übergangsabschnitts eine größere Flexibilität hinsichtlich der einsetzbaren Druckverfahren zum Aufbringen eines Dekors auf die Kantenleiste einschließlich des Übergangsabschnitts erlaubt. Dadurch kann auch der Übergangsabschnitt besser bedruckt werden. Insbesondere kann das Verlaufen von aufgebrachten Druckfarben des Dekors verringert werden. Ferner kann der Übergang im Übergangsabschnitt gleichmäßiger gestaltet werden. Dies kann insbesondere erreicht werden, ohne dass beispielsweise beim Aufbringen des Dekors mittels Inkjet Druck die Druckköpfe geneigt werden müssen. Hierdurch wird der optische Eindruck der Kantenleiste verbessert.

Die Oberseite der Kantenleiste kann auch zwei zu gegenüberliegenden Rändern des Grundkörpers hin abfallende Übergangsabschnitte aufweisen.

Die Oberseite weist vorzugsweise nicht nur einen oder mehrere Übergangsabschnitte auf. Die Breite eines oder des Übergangsabschnitts beträgt 0,1 bis 30%, bevorzugt 0,1 bis 20% und am bevorzugtesten 0,1 bis 10%, der Gesamtbreite der Oberseite. Die vorgenannten Prozentangaben beziehen sich dabei auf eine erfindungsgemäße Kantenleiste, die an einem Möbelstück fertig angebracht ist und bei der sämtliche Arbeitsschritte durchgeführt wurden einschließlich der Bearbeitung, um ein bündiges Abschließen der Kante mit dem Möbelstück sicherzustellen. Vor dem Anbringen der Kantenleiste kann die Breite des Übergangsabschnitts vorzugsweise 0,1 bis 90%, weiter bevorzugt 0,1 bis 70%, noch weiter bevorzugt 0,1 bis 50%, noch weiter bevorzugt 0,1 bis 30%, am bevorzugtesten 0,1 bis 20%, der Gesamtbreite der Oberseite betragen. Ferner ist die Oberseite der Kantenleiste außerhalb des Übergangsabschnitts vorzugsweise im Wesentlichen nicht gestuft.

Die Kantenleiste weist einen Grundkörper mit einer an ein Möbelstück anlegbaren Unterseite auf. Dabei ist die Unterseite vorzugsweise an eine Schmalseite einer Möbelplatte anlegbar. Die Schmalseiten von Möbelplatten sind vorzugsweise durch Sägen entstanden. Die Schmalseiten der Möbelplatte sind vorzugsweise im Wesentlichen eben.

Gemäß einer Ausführungsform der erfindungsgemäßen Kantenleiste kann die Kantenleiste auch eine Vorspannung, insbesondere über die Breite der Kantenleiste, aufweisen. Durch die Vorspannung, insbesondere über die Breite der Kantenleiste, kann erreicht werden, dass eine Haftschicht, wie eine Klebstoffschicht, nach Anbringung der Kantenleiste an ein Möbelstück durch die Kantenleiste verdeckt ist. Zweckmäßigerweise ist die Vorspannung der Kantenleiste über ihre Breite so gewählt, dass die Kante eine konkave Form mit einer Auswölbung von 0,3 mm oder weniger, bevorzugt von 0,05 bis 0,25 mm, aufweist. Die vorstehend angegebene Vorspannung hat sich insbesondere für Kantenleisten mit einer Breite von bis zu 50 mm als zweckmäßig erwiesen.

Eine Neigung der Stufenflächen bezüglich der Unterseite hat sich als vorteilhaft erwiesen. So ist vorzugsweise vorgesehen, dass die randseitigen Flächen der Stufen nicht wie bei Stufen üblich orthogonal sondern geneigt zur Unterseite verlaufen. Durch die Neigung der randseitigen Flächen der Stufen können diese mittels verschiedener Druckverfahren einfacher mit einem Dekor versehen werden.

Die oberseitigen Flächen können parallel zur Unterseite verlaufen oder sie können geneigt sein. Betragen die kleinsten Winkel der oberseitigen Flächen bezüglich der Unterseite jeweils 0°, verlaufen also die oberseitigen Flächen parallel zur Unterseite, so können die oberseitigen Flächen gut mit einem Dekor versehen werden. Betragen die kleinsten Winkel der oberseitigen Flächen bezüglich der Unterseite jeweils mehr als 0° und bis zu 75°, insbesondere bis zu 45°, so können sie ebenfalls mit einem Dekor versehen werden. Gleichzeitig können steilere Übergangsabschnitte realisiert werden. Betragen die kleinsten Winkel der oberseitigen Flächen bezüglich der Unterseite jeweils weniger als 0° und bis zu -45°, so können sie ebenfalls mit einem Dekor versehen werden. Gleichzeitig kann ein Verlauf des Dekors über verschiedene Stufen vermieden werden. Bevorzugt sind die oberseitigen Flächen bezüglich der Unterseite so geneigt, dass die kleinsten Winkel der oberseitigen Flächen bezüglich der Unterseite im Mittel jeweils von 10° bis 45° oder jeweils von -10° bis -45° betragen.

Im Folgenden werden nun verschiedene Ausgestaltungen der erfindungsgemäßen Kantenleiste sowie des erfindungsgemäßen Verfahrens zum Herstellen der erfindungsgemäßen Kantenleiste beschrieben, die auch Gegenstand der Unteransprüche sind.

Die oberseitigen Flächen der Stufen sind vorzugsweise unabhängig voneinander so ausgerichtet, dass die kleinsten Winkel der oberseitigen Flächen bezüglich der Unterseite jeweils im Mittel von -45° bis 75°, insbesondere bis 45°, betragen. Ferner sind die randseitigen Flächen der Stufen vorzugsweise unabhängig voneinander so ausgerichtet, dass die kleinsten Winkel der randseitigen Flächen bezüglich der Unterseite jeweils im Mittel von 20° bis weniger 90°, insbesondere von 46° bis weniger 90°, insbesondere bis 80°, betragen.

Denkbar ist es, dass die oberseitigen und randseitigen Flächen der Stufen jeweils gerade, insbesondere ohne eine Änderung des Winkels bezüglich der Unterseite, verlaufen. Denkbar ist es ferner, dass die jeweiligen Flächen der Stufen so ausgestaltet sind, dass einzelne Abschnitte der Fläche einer Stufe unterschiedliche Winkel bezüglich der Unterseite aufweisen, wobei die Fläche der Stufe jedoch im Mittel in den vorstehend genannten Winkelbereichen verläuft. Dabei können Abschnitte der Fläche auch mit Winkeln außerhalb der vorgenannten Bereiche bezüglich der Unterseite angeordnet sein. Beispielsweise kann eine oberseitige Fläche einen Abschnitt aufweisen, der im Bereich von 0° bis 45° bezüglich der Unterseite liegt, und einen weiteren Abschnitt aufweisen, der im Bereich von -1° bis -45° bezüglich der Unterseite liegt. So kann beispielsweise eine Näpfchenstruktur der Stufen realisiert werden. Entsprechendes gilt für die randseitigen Flächen. Vorzugsweise verlaufen die oberseitigen und die randseitigen Flächen der Stufen jeweils gerade.

Die Stufen des Übergangsabschnitts können eine gezackte Form aufweisen. Die Stufen des Übergangsabschnitts können auch eine gewellte Form aufweisen. Stufen mit einer gewellten Form weisen vorzugsweise einen Wellenberg auf. Zwischen zwei aufeinanderfolgenden Stufen mit einer gewellten Form ist vorzugsweise ein Wellental. Bei aufeinander folgenden Stufen mit gewellter Form werden vorzugsweise die kleinsten Winkel der Stufen mit gewellter Form bezüglich der Unterseite ausgehend von der Verbindungslinie vom höchsten Punkt des Wellenbergs zum tiefsten Punkt des Wellentals, beispielsweise der Sekante durch diese beiden Punkte, gemessen. Insbesondere für die Stufenhöhe und die Stufenbreite können die randseitige Fläche und die oberseitige Fläche einer Stufe mit gewellter Form entsprechend durch die Ebenen definiert werden, die jeweils diese Verbindungslinien enthält. Dem Fachmann ist klar, dass hierfür nicht beliebige Ebenen in Frage kommen, die die jeweilige Verbindungslinie enthalten. Vielmehr enthält die entsprechende Ebene über die Länge der Kantenleiste vorzugsweise mehrere Verbindungslinien derselben Stufe mit gewellter Form. Die oberseitigen Flächen sind dabei vorzugsweise die Flächen, die kleinere kleinste Winkel zur Unterseite aufweisen. Stufen des Übergangsabschnitts mit gewellter Form können also insbesondere als Stufen aufgefasst werden, die Ausbuchtungen aufweisen. Für Stufen mit einer gewellten Form können die Verbindungslinien, beispielsweise die Sekanten, und damit die kleinsten Winkel insbesondere in mikroskopischen Aufnahmen von Querschnitten einer Kantenleiste bestimmt werden. Der tiefste Punkt eines Wellentals ist vorzugsweise der Punkt, an dem sich zwei aufeinanderfolgende Stufen mit gewellter Form berühren. Der höchste Punkt eines Wellenbergs einer Stufe mit gewellter Form ist vorzugsweise der Punkt, der rechtwinklig zu der Verbindungslinie zwischen den tiefsten Punkten der beiden angrenzenden Wellentälern den größten Abstand hat.

Denkbar ist auch, dass eine oder mehrere der Stufen eine zackige Form aufweisen und eine oder mehrere der Stufen eine gewellte Form aufweisen. Folgt eine Stufe mit einer gewellten Form auf eine Stufe mit einer zackigen Form oder umgekehrt, so werden die kleinsten Winkel der Stufe mit gewellter Form bezüglich der Unterseite vorzugsweise ausgehend von der Verbindungslinie vom höchsten Punkt des Wellenbergs zum Übergangspunkt der Stufe mit gewellter Form zur Stufe mit zackiger Form gemessen. Für die randseitigen und oberseitigen Flächen gilt das vorstehend für die Stufen mit gewellter Form Gesagte entsprechend. Der höchste Punkt des Wellenbergs der Stufe mit gewellter Form ist in diesem Fall vorzugsweise der Punkt, der rechtwinklig zu der Verbindungslinie zwischen den beiden angrenzenden Übergangspunkten von der Stufe mit gewellter Form zu den Stufen mit zackiger Form den größten Abstand hat.

Stufen mit gewellter Form können beispielsweise entstehen, wenn das Material bei der Herstellung einer Kantenleiste mit Stufen mit zackiger Form nach dem Formen bei einem Erkalten unterhalb seiner Vicat-Erweichungstemperatur eine gewellte Form einnimmt.

Der Übergangsabschnitt der Kantenleiste weist vorteilhafterweise mindestens zwei Stufen mit jeweils einer oberseitigen Fläche und einer randseitigen Fläche pro Stufe auf. Vorzugsweise weist der Übergangsabschnitt mindestens fünf Stufen, bevorzugt mindestens zwanzig Stufen, weiter bevorzugt mindestens fünfzig Stufen, weiter bevorzugt mindestens achtzig Stufen, besonders bevorzugt mindestens hundert Stufen, mit jeweils einer oberseitigen Fläche und einer randseitigen Fläche pro Stufe auf. Eine höhere Anzahl an Stufen erlaubt es dabei, das Profil des Übergangsabschnitts glatter zu gestalten.

Die erste Stufe des Übergangsabschnitts der erfindungsgemäßen Kantenleiste beginnt vorzugsweise am Rand der Kantenleiste. Die letzte Stufe des Übergangsabschnitts der erfindungsgemäßen Kantenleiste endet vorzugsweise am nicht abfallenden Abschnitt der Oberseite der erfindungsgemäßen Kantenleiste. Die letzte Stufe kann auch nur eine oberseitige Fläche, die insbesondere im Bereich von 10° bis 45° bezüglich der Unterseite geneigt ist, aufweisen.

Die randseitigen Flächen der Stufen des Übergangsabschnitts der Kantenleiste weisen insbesondere eine Länge und eine Breite auf. Die Längen der randseitigen Flächen der Stufen des Übergangsabschnitts sind insbesondere durch die Länge der Kantenleiste vorgegeben. Vorzugsweise sind die Längen der randseitigen Flächen des Übergangsabschnitts identisch. Die Breiten der randseitigen Flächen können gleich oder verschieden sein. Vorzugsweise sind die Breiten der randseitigen Flächen des Übergangsabschnitts identisch.

Die oberseitigen Flächen der Stufen des Übergangsabschnitts der Kantenleiste weisen insbesondere eine Länge und eine Breite auf. Die Längen der oberseitigen Flächen der Stufen des Übergangsabschnitts sind insbesondere durch die Länge der Kantenleiste vorgegeben. Vorzugsweise sind die Längen der oberseitigen Flächen des Übergangsabschnitts identisch. Die Breiten der oberseitigen Flächen können gleich oder verschieden sein. Vorzugsweise weist die oberseitige Fläche der ersten Stufe eine größere Breite auf als die nachfolgende Stufe und/oder die nachfolgenden Stufen.

Unterschiede in den Breiten der randseitigen Flächen untereinander und der oberseitigen Flächen untereinander hängen insbesondere von dem gewünschten Profil des Übergangsabschnitts ab. So kann es für gerade Profile wie eine Fase vorteilhaft sein, wenn die randseitigen Flächen der Stufen und die oberseitigen Flächen der auf die erste Stufe folgenden Stufen eine identische Breite aufweisen. Für ein rundes Profil des Übergangsabschnitts kann es hingegen vorteilhaft sein, wenn die Breiten der randseitigen Flächen der Stufen und die Breiten der oberseitigen Flächen der auf die erste Stufe folgenden Stufen nicht identisch sind.

Besonders bevorzugt erstreckt sich in der erfindungsgemäßen Kantenleiste die oberseitige Fläche der ersten Stufe bis zum Rand des Grundkörpers, wobei die Länge der oberseitigen Flächen der Stufen identisch ist und durch die Länge der Kantenleiste vorgegeben ist und wobei die oberseitige Fläche der ersten Stufe eine größere Breite aufweist, als die oberseitige Fläche der nachfolgende Stufe und/oder der nachfolgenden Stufen. Dabei ist bevorzugt, wenn die oberseitige Fläche der ersten Stufe nicht parallel zur Unterseite der Kantenleiste verläuft, sondern bezüglich der Unterseite so geneigt ist, dass der kleinste Winkel der oberseitigen Fläche der ersten Stufe bezüglich der Unterseite im Mittel von 10° bis 45° beträgt. Besonders bevorzugt bildet die erste Stufe einen nasenförmigen Vorsprung.

Wenn die erste Stufe eine größere Breite aufweist als die nachfolgende(n) Stufe(n), insbesondere indem sie einen nasenförmigen Vorsprung bildet, kann sie über die Schmalseite eines Möbelstücks überstehen, selbst wenn der gegenüberliegende Rand der Kantenleiste bündig mit dem Rand der Schmalseite des Möbelstücks anliegt. Der überstehende Teil des Vorsprungs kann in einem nachgelagerten materialabtragenden Schritt entfernt werden, wobei vorteilhafterweise der überwiegende Teil der Kantenleiste unbearbeitet bleibt. Der Überstand kann insbesondere beim Fügen der Kantenleiste an die Möbelplatte abgetrennt werden. Das Abtrennen des Überstands kann mittels mechanischer Bearbeitung wie Fräsen oder Schneiden, bevorzugt mit einer Ziehklinge, erfolgen. Das Abtrennen des Überstands kann auch durch Abschmelzen beispielsweise mittels Laser, Hotair oder Mikrowellen erreicht werden. Das Abschmelzen des Überstands kann insbesondere bei Kantenleisten, die eine Funktionsschicht umfassen, angewendet werden. Dadurch bleibt auch der überwiegende Teil des Dekors insbesondere im Übergangsabschnitt erhalten. Somit kann aufgrund des nasenförmigen Vorsprungs das Erscheinungsbild des Rands der Kantenleiste im Wesentlichen erhalten bleiben.

Die größere Breite der ersten Stufe der Kantenleiste bietet ferner den Vorteil, dass die Dickentoleranzen der Möbelstücke, insbesondere der Möbelplatten, an die sie appliziert werden, gut kaschiert werden können. Dadurch ist es auch einfacher die erfindungsgemäße Kantenleiste bündig an dem Möbelstück anzubringen. Eine Kantenleiste mit zwei Übergangsabschnitten an gegenüberliegenden Rändern des Grundkörpers kann sowohl an der Oberseite als auch an der Unterseite der Möbelplatte gut angepasst werden. Dadurch sind höhere Toleranzen beim Anbringen der Kantenleiste an die Möbelplatte möglich.

Vorzugsweise ist die Breite der oberseitigen Fläche der ersten Stufe mindestens zweimal größer, insbesondere mindestens dreimal größer, als die Breite der oberseitigen Fläche der nachfolgenden Stufe und/oder der nachfolgenden Stufen. Zweckmäßigerweise beträgt die Breite der oberseitigen Fläche der ersten Stufe 0,1 bis 30 mm, bevorzugt 0,1 bis 15 mm, weiter bevorzugt 0,1 bis 10 mm, weiter bevorzugt 0,1 bis 5 mm, noch weiter bevorzugt 0,25 bis 4 mm, besonders bevorzugt 0,3 bis 3 mm. Derartige Breiten stellen einen guten Kompromiss zwischen einem guten Erscheinungsbild der Kante nach dem Anbringen sowie Entfernen des Überstands und Materialverbrauch dar. Insbesondere ab einer Breite von 0,1 bis 5 mm ist die mechanische Nachbearbeitung einfacher, da die Kantenleiste stabiler ist.

Die Breite der oberseitigen Fläche der auf die erste Stufe folgenden Stufe und/oder der auf die erste Stufe folgenden Stufen beträgt bevorzugt von 0,01 bis 1 mm, weiter bevorzugt von 0,01 bis 0,5 mm, besonders bevorzugt von 0,01 bis 0,2 mm.

Ferner kann der Grundkörper der erfindungsgemäßen Kantenleiste am Übergang von der oberseitigen Fläche der ersten Stufe zur randseitigen Fläche der ersten Stufe eine Dicke von 0,01 bis 3 mm, bevorzugt von 0,05 bis 1 mm, weiter bevorzugt von 0,05 bis 0,3 mm, aufweisen. Vorzugsweise weist die erste Stufe des Übergangsabschnitts somit eine geringe Dicke auf. Die erste Stufe bzw. der nasenförmige Vorsprung der Kantenleiste ist somit dünn. Wird nun der überstehende Teil des Vorsprungs der Kantenleiste in einem nachgelagerten materialabtragenden Schritt entfernt, wird im Übergangsabschnitt nur in ein sehr schmaler Bereich ohne Dekor erzeugt. Dadurch bleibt auch der überwiegende Teil des Dekors insbesondere im Übergangsabschnitt erhalten. Somit kann aufgrund des nasenförmigen Vorsprungs das Erscheinungsbild des Rands der Kantenleiste im Wesentlichen erhalten bleiben. Dadurch wird der optische Eindruck der Kantenleiste am Möbelstück verbessert.

Vorzugsweise weist der Übergangsabschnitt der erfindungsgemäßen Kantenleiste, insbesondere die oberseitigen Flächen und die randseitigen Flächen, eine Rauhigkeit R_{z}, gemessen nach DIN EN ISO 4287, insbesondere DIN EN ISO 4287:2010-07, von 1 bis 10 µm, bevorzugt von 3 bis 8 µm oder von 4 bis 7 µm, auf. Dadurch kann das Verlaufen von Druckfarben reduziert werden. Ferner kann erreicht werden, dass ein aufgedrucktes Dekor besser haftet. Weiterhin wird dadurch ein ästhetisch ansprechender optischer Eindruck, insbesondere ein sogenannter glatt-matt Eindruck, hervorgerufen.

Der Grundkörper der erfindungsgemäßen Kantenleiste kann verschiedene Breiten aufweisen. Vorzugsweise weist der Grundkörper eine Breite von 9 bis 150 mm, bevorzugt von 9 bis 100mm, weiter bevorzugt von 9 bis 85 mm, besonders bevorzugt von 16 bis 60 mm auf. Kantenleisten mit einem Grundkörper mit einer der vorgenannten Breiten können an gängige Möbelplatten angebracht werden.

Der Grundkörper der erfindungsgemäßen Kantenleiste kann aus verschiedenen Materialien gefertigt werden. Bevorzugt umfasst der Grundkörper der erfindungsgemäßen Kantenleiste mindestens ein Material, das einen Kunststoff umfasst, oder besteht daraus. Weiter bevorzugt umfasst der Grundkörper mindestens einen Kunststoff. Der Kunststoff ist vorzugsweise aus der Gruppe bestehend aus Acrylnitril-Butadien-Styrol-Copolymer, Polyethylen, vernetztes Polyethylen (PE-X), Polypropylen, Polyamid, Polyvinylchlorid, Polycarbonat, Styrolbutadien, Polyethylenterephthalat, Polymethylmetacrylat, wood-plastic-composite (WPC) und Mischungen davon, ausgewählt. Für wood-plastic-composite kommen insbesondere Zusammensetzungen enthaltend Polypropylen sowie 50 bis 90 Gew.-% Holzfasern und/oder Holzmehl, bezogen auf das Gesamtgewicht der Zusammensetzung, in Frage. Diese Kunststoffe haben sich zur Herstellung der erfindungsgemäßen Kantenleiste als gut geeignet herausgestellt.

Der Grundkörper der erfindungsgemäßen Kantenleiste kann einschichtig oder mehrschichtig, insbesondere zwei- oder dreischichtig, sein. Der Grundkörper kann mehrere, insbesondere zwei oder drei, Schichten umfassen. Die Schichten können gleiche oder verschiedene Materialien, bevorzugt verschiedene Materialien, enthalten. Mehrschichtige Grundkörper können durch Coextrusion erhalten werden. Beispielsweise kann der Grundkörper eine obere und eine untere Schicht aufweisen, die unterschiedliche Farben aufweisen. Bevorzugt ist die untere Schicht dabei dunkler als die obere Schicht. Die obere Schicht kann insbesondere ein Dekorgrund sein. Ferner kann der Grundkörper eine obere, eine mittlere und eine untere Schicht aufweisen, wobei die untere Schicht die Unterseite des Grundkörpers umfasst und wobei über die untere Schicht eine Adhäsion an ein Möbelstück erreicht wird. Die untere Schicht kann insbesondere eine Funktionsschicht sein. Als Funktionsschicht kommt zweckmäßigerweise eine Schicht in Frage, mit der die Kantenleiste an einer Möbelplatte befestigt werden kann, insbesondere stoffschlüssig befestigt werden kann, beispielsweise eine Schmelzschicht oder eine Schmelzklebstoffschicht. Die obere Schicht kann ein Dekorgrund sein. Die mittlere Schicht kann eine Schicht sein, die der Kantenleiste Stabilität verleiht. Bevorzugt weist die unterste Schicht, die die Unterseite des Grundkörpers enthält, eine Dicke von 0,05 bis 3 mm, weiter bevorzugt 0,1 bis 1,5 mm, noch weiter bevorzugt 0,1 bis 1 mm, noch weiter bevorzugt 0,1 bis 0,5 mm, besonders bevorzugt 0,1 bis 0,4 mm, auf.

Die Oberseite des Grundkörpers der erfindungsgemäßen Kantenleiste kann ein Dekor aufweisen. Dabei kann das Dekor die Oberseite des Grundkörpers ohne den Übergangsabschnitt bedecken. Bevorzugt ist dabei die Oberseite des Grundkörpers ohne den Übergangsabschnitt vollflächig oder teilweise von dem Dekor bedeckt.

Das Dekor kann die Oberseite des Grundkörpers auch nur im Übergangsabschnitt bedecken. Bevorzugt ist dabei die Oberseite des Grundkörpers im Übergangsabschnitt vollflächig von dem Dekor bedeckt. Ferner kann das Dekor die Oberseite des Grundkörpers einschließlich des Übergangsabschnitts bedecken. Bevorzugt ist die Oberseite des Grundkörpers einschließlich Übergangsabschnitt von dem Dekor bedeckt. Besonders bevorzugt ist die Oberseite des Grundkörpers einschließlich Übergangsabschnitt vollflächig von dem Dekor bedeckt. Dabei kann sich das Dekor auf der Oberseite des Grundkörpers im Übergangsabschnitt vom Dekor auf der Oberseite des restlichen Grundkörpers unterscheiden. Hierdurch kann beispielsweise ein sogenannter Stirnholzeffekt erzielt werden. Bevorzugt kann das Dekor auf der Oberseite des Grundkörpers einschließlich im Übergangsabschnitt gleich sein. Dadurch kann der optische Eindruck der Kantenleiste gut eingestellt werden. Ferner kann so die Kantenleiste optisch gut an verschiedene Möbelstücke angepasst werden.

Das Dekor kann durch verschiedene Arten auf die erfindungsgemäße Kantenleiste aufgebracht sein. Das Dekor kann beispielsweise durch Tiefdruck, insbesondere durch indirekten Tiefdruck, durch Siebdruck, durch Flexodruck, durch Tauchverfahren, insbesondere durch cubic-print, durch Digitaldruck, insbesondere durch Inkjet-Druck, durch Aufbringen einer bedruckten Folie oder mittels einer Transferfolie aufgebracht werden. Bevorzugt ist das Dekor aufgedruckt. Weiter bevorzugt ist das Dekor durch Digitaldruck aufgebracht. Besonders bevorzugt ist das Dekor mittels einem berührungslosen Druckverfahren, insbesondere mittels Inkjet-Druck, aufgebracht.

Vor dem Aufbringen des Dekors kann ein Primer auf die Oberseite des Grundkörpers aufgebracht werden. Ein Primerauftrag kann hilfreich sein, wenn das Dekor mittels Druckfarben, insbesondere durch Tiefdruck, Siebdruck, Flexodruck, Digitaldruck oder Inkjet-Druck aufgebracht wird. Mit Hilfe eines Primers kann der Verlauf von Druckfarben besser gesteuert werden. Ein Primer kann dabei auf die Oberseite des Grundkörpers nur im Übergangsabschnitt aufgebracht werden. Ein Primer kann auch nur auf die Oberseite des Grundkörpers ohne den Übergangsabschnitt aufgebracht werden. Ein Primer kann ebenfalls auf die Oberseite des Grundkörpers einschließlich im Übergangsabschnitt aufgebracht werden. Wo der Primer aufgetragen wird, hängt insbesondere damit zusammen, wo ein Dekor aufgebracht werden soll. Vorzugsweise wird der Primer in dem Bereich der Oberseite des Grundkörpers aufgebracht, in dem ein Dekor aufgebracht werden soll.

Die erfindungsgemäße Kantenleiste kann auch eine Struktur aufweisen. Die Struktur kann dabei eine Tiefe von bis zu 400 µm aufweisen, bevorzugt von 1 bis 300 µm, weiter bevorzugt von 10 bis 200 µm, noch weiter bevorzugt von 15 bis 100 µm. So kann die Oberseite des Grundkörpers nur im Übergangsabschnitt eine Struktur aufweisen. Ebenso kann die Oberseite des Grundkörpers bis auf den Übergangsabschnitt eine Struktur aufweisen. Ferner kann die Oberseite des Grundkörpers einschließlich im Übergangsabschnitt eine Struktur aufweisen. Dabei kann sich die Struktur auf der Oberseite des Grundkörpers im Übergangsabschnitt von der Struktur auf der Oberseite des restlichen Grundkörpers unterscheiden. Ebenso kann die Struktur auf der Oberseite des Grundkörpers einschließlich im Übergangsabschnitt gleich sein. Die Struktur kann durch Erhebungen und oder Vertiefungen gebildet werden. Erhebungen können insbesondere mittels eines Strukturlacks aufgebracht sein. Vertiefungen können insbesondere eingeprägt sein. Alternativ können Vertiefungen auch mit Hilfe eines Lasers erzeugt worden sein.

Ferner kann die erfindungsgemäße Kantenleiste glänzend sein. So kann die Oberseite des Grundkörpers nur im Übergangsabschnitt einen Glanz aufweisen. Ebenso kann die Oberseite bis auf den Übergangsabschnitt einen Glanz aufweisen. Ferner kann die Oberseite des Grundkörpers einschließlich im Übergangsabschnitt einen Glanz aufweisen. Dabei kann sich der Glanz auf der Oberseite des Grundkörpers im Übergangsabschnitt vom Glanz auf der Oberseite des restlichen Grundkörpers unterscheiden. Bevorzugt kann der Glanz auf der Oberseite des Grundkörpers einschließlich im Übergangsabschnitt gleich sein. Anstelle eines Glanzes kann die Kantenleiste auch matt sein. Für eine matte Kantenleiste gilt das vorstehend für eine glänzende Kantenleiste Gesagte entsprechend. Die erfindungsgemäße Kantenleiste kann vorteilhafterweise alle Glanzgrade, insbesondere von stumpfmatt bis hochglänzend, aufweisen. Vorzugsweise kann die Kantenleiste die Glanzgrade in den zuvor beschriebenen Variationen bezüglich der Einheitlichkeit auf der Oberseite des Grundkörpers aufweisen.

Der Grundkörper der erfindungsgemäßen Kantenleiste kann auch quer zur Längsrichtung mindestens eine stufenförmige Vertiefung aufweisen. Diese stufenförmige Vertiefung kann beispielsweise durch Einprägen, durch Zerspanen, mittels Laser oder mit einem Medienstrahl, beispielsweise einem Wasserstrahl, hergestellt werden. Die stufenförmige Vertiefung weist vorzugsweise ein Stufenprofil auf, insbesondere auf beiden Seiten der stufenförmigen Vertiefung. Vorzugsweise weist die mindestens eine stufenförmige Vertiefung dasselbe Stufenprofil wie eine hierin im Zusammenhang mit der zweiten Alternative des erfindungsgemäßen Verfahrens beschriebene Stufenrille mit Stufenprofil auf beiden Seiten auf, allerdings in Querrichtung des Grundkörpers. Denkbar sind auch mehrere stufenförmige Vertiefungen im Grundkörper. Diese können insbesondere einen bestimmten Abstand voneinander aufweisen, beispielsweise jeweils 60 cm oder mehr. Mit derartigen stufenförmigen Vertiefungen können insbesondere die Ecken von Möbelplatten optisch ansprechend gestaltet werden.

Die Kantenleiste kann ferner an den Enden des Grundkörpers in Längsrichtung jeweils unabhängig voneinander zusätzlich einen stufenförmigen Abschluss aufweisen. Für die Form des stufenförmigen Abschluss gilt das für den Übergangsabschnitt Gesagte entsprechend. Mit dem stufenförmigen Abschluss kann der optische Eindruck an den Ecken eines Möbelstücks aufgrund desselben Prinzips wie für den Übergangsabschnitt erläutert verbessert werden.

Die vorliegende Erfindung stellt ferner ein Verfahren zur Herstellung der erfindungsgemäßen Kantenleiste bereit, bei dem der Grundkörper der Kantenleiste umfassend eine Unterseite und eine Oberseite mit Übergangsabschnitt aus mindestens einem Material geformt wird.

Mit dem erfindungsgemäßen Verfahren kann eine erfindungsgemäße Kantenleiste hergestellt werden. Dementsprechend gilt für den Grundkörper der Kantenleiste, insbesondere für die Unterseite, die Oberseite, den Übergangsabschnitt, die Stufenform des Übergangsabschnitts, die oberseitige Fläche der ersten Stufe, die oberseitigen Flächen der auf die erste Stufe nachfolgende(n) Stufe(n), die randseitigen Flächen und den Grundkörper, sowie für das mindestens eine Material das jeweils für die erfindungsgemäße Kantenleiste Gesagte entsprechend.

Das erfindungsgemäße Verfahren umfasst vorzugsweise einen Extrusionsschritt, insbesondere einen Coextrusionsschritt. Dabei kann der Grundkörper unmittelbar extrudiert oder coextrudiert werden. Ferner kann auch ein Vorläufer, beispielsweise ein Band, ein Kantenband oder ein Grundkörpervorläufer extrudiert oder coextrudiert werden. Der Grundkörper der Kantenleiste kann ferner ein oder mehrere weitere Materialien, vorzugsweise einen oder mehrere weitere Kunststoffe, umfassen, insbesondere wenn das Verfahren einen Coextrusionsschritt umfasst. Beispielsweise kann der Grundkörper oder der Vorläufer, beispielsweise das Band oder das Kantenband, einen Dekorgrund aufweisen. Dieser wird vorteilhafterweise bei der Herstellung der Kantenleiste angebracht, insbesondere als oberste Schicht des Grundkörpers oder des Vorläufers coextrudiert. Dadurch kann Farbgleichheit auf der Oberseite einschließlich im Übergangsabschnitt gewährleistet werden. Auf der Unterseite des Grundkörpers oder des Vorläufers kann ferner beispielsweise eine Funktionsschicht und/oder eine Farbschicht coextrudiert werden. Für die Funktionsschicht gilt das für die Funktionsschicht der erfindungsgemäßen Kantenleiste Gesagte entsprechend. Denkbar ist ferner, dass in einem Coextrusionsschritt verschiedene Materialien abschnittsweise coextrudiert werden. Beispielsweise kann der Übergangsabschnitt in einem anderen Material coextrudiert werden als der Rest der Kantenleiste. Entsprechendes gilt für einen Vorläufer des Grundkörpers.

Im erfindungsgemäßen Verfahren kann der Grundkörper auf verschiedene Art und Weise hergestellt werden. Beispielsweise kann der Grundkörper unmittelbar durch Profilextrusion geformt werden. Ferner kann zunächst ein Band oder ein Kantenband extrudiert werden, das auf verschiedene Arten bearbeitet wird. Schließlich kann der Grundkörper auch mittels Spritzguss geformt werden. Der geformte Grundkörper kann die erfindungsgemäße Kantenleiste bilden, insbesondere eine undekorierte Kantenleiste. Zusätzlich kann aber auch noch ein Dekor und/oder eine Struktur und/oder ein Lack aufgebracht werden, insbesondere auf die Oberseite. Vorzugsweise wird mindestens ein Dekor aufgebracht. Nachfolgend sind einige alternative Ausführungsformen des erfindungsgemäßen Verfahrens beispielhaft beschrieben.

Dem Fachmann sind verschiedene Arten bekannt, um in einem Dekor oder in einem Lack Unterschiede auf der Oberseite, beispielsweise Unterschiede im Dekor im Übergangsabschnitt vom Rest der Oberseite, herzustellen. Beispielsweise können beim Aufbringen eines Dekors oder eines Lacks mittels Inkjet mehrere Druckköpfe hierfür eingesetzt werden. Werden ein Dekor oder ein Lack mittels Tiefdruck oder Flexodruck aufgebracht, kann ein unterschiedlicher optischen Eindruck im Übergangsabschnitt zum Rest der Oberseite durch den Einsatz von Gummiwalzen mit verschiedener Härte erreicht werden.

Gemäß einer ersten bevorzugten Alternative des erfindungsgemäßen Verfahrens wird der Grundkörper durch Profilextrusion geformt. Dabei wird der Grundkörper vorzugsweise aus der Schmelze geformt. Der Grundkörper umfassend den Übergangsabschnitt wird gemäß dieser Alternative unmittelbar geformt.

Gemäß der ersten Alternative des erfindungsgemäßen Verfahrens kann der Grundkörper, insbesondere auf der Oberseite, mit einem Dekor bedeckt werden. Das Dekor kann auf den Grundkörper beispielsweise durch Tiefdruck, insbesondere durch indirekten Tiefdruck, durch Flexodruck, durch Tauchverfahren, insbesondere durch cubic-print, durch Digitaldruck, insbesondere durch Inkjet-Druck, durch Aufbringen einer bedruckten Folie oder mittels einer Transferfolie aufgebracht werden. Bevorzugt wird das Dekor aufgedruckt. Vorzugsweise wird der Grundkörper, insbesondere auf der Oberseite, mit einem Dekor durch Digitaldruck bedruckt. Das voranstehend zur Gleichheit oder Verschiedenheit des Dekors im Übergangsabschnitt und auf der restlichen Oberseite des Grundkörpers der erfindungsgemäßen Kantenleiste Gesagte gilt für das erfindungsgemäße Verfahren entsprechend.

Ein Dekor kann mit einem oder mehreren Druckköpfen aufgebracht werden. Der oder die Druckköpfe können geneigt sein, um eine bessere Bedruckung des Übergangsabschnitts zu ermöglichen. Dabei genügt es, wenn einige der Druckköpfe geneigt sind.

In der ersten bevorzugten Alternative des erfindungsgemäßen Verfahrens kann der Grundkörper, insbesondere auf der Oberseite, mit einer Struktur versehen werden. Eine Struktur kann in den Grundkörper, insbesondere auf die Oberseite, geprägt werden, insbesondere mit einer Prägewalze. Ferner kann eine Struktur auch mit einer Strukturgeberfolie oder einem Stahlband oder mittels Laser oder durch mechanische Abtragung aufgebracht werden. Alternativ oder zusätzlich kann der Grundkörper in der ersten Alternative des erfindungsgemäßen Verfahrens auch dadurch mit einer Struktur versehen werden, dass auf den Grundkörper ein Strukturlack aufgebracht wird. Auf diese Art können insbesondere erhabene Strukturen erhalten werden. Alternativ können erhabene Strukturen auch mittels einer Folie aufgebracht werden. Dies kann vorteilhafterweise dann erfolgen, wenn auf den Grundkörper ein Dekor mit einer Transferfolie aufgebracht wird. Ferner kann eine erhabene Struktur auch mit einem 3D-Drucker aufgebracht werden. Das voranstehend zur Gleichheit oder Verschiedenheit der Struktur im Übergangsabschnitt und auf der restlichen Oberseite des Grundkörpers der erfindungsgemäßen Kantenleiste Gesagte gilt für die Kantenleiste des erfindungsgemäßen Verfahrens entsprechend.

Ferner kann in der ersten bevorzugten Alternative des erfindungsgemäßen Verfahrens auch der Glanz und/oder die Mattigkeit der Kantenleiste eingestellt werden. So können glänzende oder matte Kantenleisten hergestellt werden. Glanz kann insbesondere durch Aufbringen eines Glanzlacks auf die Kantenleiste erreicht werden. Das voranstehend zur Gleichheit oder Verschiedenheit des Glanzes im Übergangsabschnitt und auf der Oberseite des restlichen Grundkörpers der erfindungsgemäßen Kantenleiste Gesagte gilt für die Kantenleiste nach dem erfindungsgemäßen Verfahren entsprechend.

Gemäß einer zweiten bevorzugten Alternative des erfindungsgemäßen Verfahrens umfasst das Verfahren bevorzugt die Schritte
a. Herstellen, insbesondere mittels Extrusion oder Coextrusion, eines Bands mit einer Dicke, einer Längsrichtung, einer oberen Fläche und einer unteren Fläche,
b. Einbringen, insbesondere Einprägen, mindestens einer Stufenrille in die obere Fläche des Bands wodurch ein gerilltes Band erhalten wird,
c. Auftrennen, insbesondere Schneiden oder Reißen, des gerillten Bands in Längsrichtung, wodurch mindestens ein Grundkörper geformt wird,
wobei
die Stufenrille eine Stufenrillentiefe und einen stufenförmigen Querschnitt aufweist, der auf mindestens einer Seite der Stufenrille mindestens zwei Stufen mit jeweils einer oberseitigen Fläche und einer randseitigen Fläche pro Stufe aufweist, wobei vorzugsweise die oberseitigen Flächen unabhängig voneinander bezüglich der unteren Fläche so ausgerichtet sind, dass die kleinsten Winkel der oberseitigen Flächen bezüglich der unteren Fläche jeweils im Mittel von -45° bis 45° betragen und wobei vorzugsweise die randseitigen Flächen unabhängig voneinander bezüglich der unteren Fläche so geneigt sind, dass die kleinsten Winkel der randseitigen Flächen bezüglich der unteren Fläche jeweils im Mittel von 46° bis weniger 90°, insbesondere bis 80°, betragen und wobei die Stufenrillentiefe mindestens 70%, bevorzugt mindestens 80%, der Dicke des Bands beträgt.

Das Einbringen der mindestens einen Stufenrille kann beispielsweise durch Fräsen oder durch Einprägen erfolgen. Vorzugsweise wird die mindestens eine Stufenrille eingeprägt.

Grundsätzlich weist die zweite Alternative des erfindungsgemäßen Verfahrens den Vorteil auf, dass mehrere Kantenleisten in einem Arbeitsgang hergestellt werden können.

Das Band kann durch Extrusion hergestellt werden. Denkbar ist es auch, das Band mittels Coextrusion herzustellen. Wird das Band durch Coextrusion hergestellt, kann auf der Oberseite beispielsweise ein Dekorgrund coextrudiert werden. Auf der Unterseite kann beispielsweise eine Funktionsschicht und/oder eine Farbschicht coextrudiert werden. Für die Funktionsschicht gilt das für die Funktionsschicht der erfindungsgemäßen Kantenleiste Gesagte entsprechend.

Vorzugsweise wird die Stufenrille oder werden die Stufenrillen derart in das Band eingebracht, dass das gerillte Band am tiefsten Punkt der Stufenrille(n) eine Dicke von 3 mm oder weniger, bevorzugt von 1 µm bis 1 mm, weiter bevorzugt von 10 µm bis 500 µm, besonders bevorzugt von 50 bis 100 µm, aufweist.

Wird die Stufenrille eingeprägt, ist das Band beim Einprägen zweckmäßigerweise oberhalb seiner Vicat-Erweichungstemperatur. Vorzugsweise liegt das Band beim Einprägen in Form einer Schmelze, insbesondere in Form einer Kunststoffschmelze, vor. Schmelzen, insbesondere Kunststoffschmelzen, haben den Vorteil, dass sie einfacher plastisch verformbar sind als Objekte im festen Aggregatszustand. Insbesondere Kunststoffschmelzen haben den Vorteil, dass sie neben ihrer guten plastischen Verformbarkeit Formänderungen wie Einprägungen aber gut beibehalten können. Vorzugsweise wird das gerillte Band beim oder unmittelbar nach dem Prägen gekühlt, bevorzugt unter die Vicat-Erweichungstemperatur des Materials des Bands. Dadurch kann die eingeprägte Struktur gut eingefroren werden.

Die Vicat-Erweichungstemperatur wird vorzugsweise nach DIN EN ISO 306:2014-03, Verfahren B50 (Kraft von 50 N, Heizrate von 50 K/h) bestimmt.

Vorzugsweise wird in der zweiten Alternative des erfindungsgemäßen Verfahrens zusätzlich mindestens eine Geradrille in das Band eingebracht, wobei die Geradrille eine Geradrillentiefe von mindestens 70%, bevorzugt mindestens 80%, der Dicke des Bands und ein gerades Profil aufweist. Bevorzugt verläuft die Geradrille im Wesentlichen parallel zur Stufenrille. Das Einbringen der mindestens einen Geradrille kann beispielsweise durch Fräsen oder durch Einprägen erfolgen. Vorzugsweise wird die mindestens eine Geradrille eingeprägt.

Vorzugsweise wird die Geradrille oder werden die Geradrillen derart in das Band eingebracht, dass das gerillte Band am tiefsten Punkt der Geradrille(n) eine Dicke von 3 mm oder weniger, bevorzugt von 1 µm bis 1 mm, weiter bevorzugt von 10 µm bis 500 µm, besonders bevorzugt von 50 bis 100 µm, aufweist.

Dabei können die Stufenrillentiefe und die Geradrillentiefe unabhängig voneinander gewählt werden. Bevorzugt haben jedoch die Stufenrillentiefe und die Geradrillentiefe beide denselben Wert.

Der Abstand zwischen einer Stufenrille und einer benachbarten Geradrille ist dabei vorzugsweise so gewählt, dass er der Breite der erfindungsgemäßen Kantenleiste entspricht. Die Geradrille und die Stufenrille weisen in der zweiten Alternative des erfindungsgemäßen Verfahrens bevorzugt einen Abstand von 9 bis 150 mm, weiter bevorzugt von 9 bis 100 mm, noch weiter bevorzugt von 9 bis 85 mm, besonders bevorzugt von 16 bis 60 mm, zwischen einander auf.

Wie bereits vorstehend erläutert können gemäß der zweiten Alternative des erfindungsgemäßen Verfahrens mehrere Kantenleisten in einem Arbeitsgang hergestellt werden. Beispielsweise kann eine Stufenrille auf beiden Seiten der Stufenrille das Stufenprofil aufweisen. Ferner können auch mindestens 2, mindestens 5, mindestens 10 oder mindestens 15 Stufenrillen in das Band eingebracht werden. Vorteilhafterweise können zusätzlich mehrere Geradrillen, insbesondere mindestens 2, mindestens 6, mindestens 11 oder mindestens 16 Geradrillen, in das Band eingebracht werden.

Werden mehr als eine Stufenrille und eine Geradrille eingebracht, so wechseln sich vorzugsweise über die Breite des Bands Gerad- und Stufenrille(n) ab, wobei jeweils zwischen einer Gerad- und einer Stufenrille unabhängig voneinander einer der vorbezeichneten Abstände vorliegt. Die Abstände können verschieden sein. Dadurch können in einem Arbeitsgang Kantenleisten mit identischem optischen Eindruck und verschiedenen Breiten hergestellt werden. Dadurch können in einem Arbeitsgang Kantenleisten mit identischem optischen Eindruck für verschieden breite Möbelplatten hergestellt werden.

Das Auftrennen des gerillten Bands kann beispielsweise mittels Schneiden oder Reißen erfolgen. Vorzugsweise erfolgt das Auftrennen an der tiefsten eingebrachten Stufe(n) der Stufenrille(n), insbesondere entlang der Linie mit der größten Stufenrillentiefe, und/oder an der eingebrachten Geradrille(n), insbesondere entlang der Linie mit der größten Geradrillentiefe. Das Schneiden kann mit einer Schneidevorrichtung, beispielsweise einer Klinge, einer Klinge, einem Rollenscherenschnitt, einem Heißdraht oder einem Laser, durchgeführt werden. Es kann mehr als eine Schneidevorrichtung verwendet werden.

Der stufenförmige Querschnitt der Stufenrille weist gemäß der zweiten bevorzugten Alternative des erfindungsgemäßen Verfahrens auf mindestens einer Seite der Stufenrille mindestens zwei Stufen mit einer oberseitigen und einer randseitigen Fläche auf. Vorzugsweise weist der stufenförmige Querschnitt der Stufenrille auf mindestens einer Seite der Stufenrille mindestens fünf Stufen, insbesondere mindestens zehn Stufen, bevorzugt mindestens zwanzig Stufen, weiter bevorzugt mindestens 50 Stufen, weiter bevorzugt mindestens 80 Stufen, besonders bevorzugt mindestens 100 Stufen, mit jeweils einer oberseitigen Fläche und einer randseitigen Fläche pro Stufe auf. Der stufenförmige Querschnitt der Stufenrille kann auch auf beiden Seiten der Stufenrille jeweils mindestens fünf, mindestens zehn oder mindestens zwanzig oder mindestens 50 oder mindestens 80 oder mindestens 100 Stufen aufweisen. Weist der stufenförmige Querschnitt der Stufenrille an beiden Seiten der Stufenrille Stufen auf, so können nahezu ohne Materialverlust mehrere Kantenleisten in einem Arbeitsgang hergestellt werden, insbesondere wenn das Band die Breite von zwei Kantenleisten aufweist. In diesem Fall müssen keine Geradrillen in das Band eingebracht werden.

Die randseitigen Flächen der Stufen der Stufenrille in der zweiten bevorzugten Alternative des erfindungsgemäßen Verfahrens weisen insbesondere eine Länge und eine Breite auf. Das für die Längen und Breiten der randseitigen Flächen der Stufen der erfindungsgemäßen Kantenleiste Gesagte, gilt für die randseitigen Flächen der Stufen der Stufenrille entsprechend.

Die oberseitigen Flächen der Stufen der Stufenrille in der zweiten bevorzugten Alternative des erfindungsgemäßen Verfahrens weisen insbesondere eine Länge und eine Breite auf. Das für die Längen der oberseitigen Flächen der Stufen der erfindungsgemäßen Kantenleiste Gesagte, gilt für die oberseitigen Flächen der Stufen der Stufenrille entsprechend. Insbesondere gilt für die Breite der oberseitigen Fläche der tiefsten eingebrachten Stufe das für die Breite der oberseitigen Fläche der ersten Stufe der erfindungsgemäßen Kantenleiste Gesagte entsprechend. Dabei entspricht insbesondere die tiefste Stufe der Stufenrille der ersten Stufe der erfindungsgemäßen Kantenleiste.

Gemäß der zweiten Alternative des erfindungsgemäßen Verfahrens kann in einem weiteren Schritt ein Dekor aufgebracht werden. Um einen optisch ansprechenderen Eindruck zu erhalten kann ein Dekor auf das Band oder auf das gerillte Band aufgebracht werden. Bevorzugt wird ein Dekor auf das gerillte Band aufgebracht. Das Dekor kann durch verschiedene Arten aufgebracht werden. Das Dekor kann beispielsweise durch Tiefdruck, insbesondere durch indirekten Tiefdruck, durch Siebdruck, durch Flexodruck, durch Tauchverfahren, insbesondere durch cubic-print, durch Digitaldruck, insbesondere durch Inkjet-Druck, durch Aufbringen einer bedruckten Folie oder mittels einer Transferfolie aufgebracht werden. Bevorzugt wird das Dekor aufgedruckt. Weiter bevorzugt wird das Dekor durch Digitaldruck aufgebracht. Besonders bevorzugt wird das Dekor mittels eines berührungslosen Druckverfahrens, insbesondere mittels Inkjet-Druck, aufgebracht. Das Dekor wird dabei so auf den Grundkörper, auf das Band oder auf das gerillte Band, jeweils insbesondere auf die Oberseite, aufgebracht, dass das für die voranstehend zur Gleichheit oder Verschiedenheit des Dekors im Übergangsabschnitt und auf der Oberseite des restlichen Grundkörpers der erfindungsgemäßen Kantenleiste Gesagte für die gemäß der zweiten Alternative des erfindungsgemäßem Verfahrens hergestellten Kantenleisten entsprechend gilt. Obwohl das Dekor vorzugsweise auf das Band oder auf das gerillte Band aufgebracht wird, ist es auch möglich, das Dekor auf das Kantenprofil aufzubringen.

Gemäß der zweiten bevorzugten Alternative des erfindungsgemäßen Verfahrens kann auch eine Kantenleiste mit einer Struktur hergestellt werden. Eine Kantenleiste mit Struktur kann durch Prägen, beispielsweise durch Einprägen, der Struktur in das Band oder in das gerillte Band, erhalten werden. Wird die Stufenrille(n) und gegebenenfalls die Geradrille(n) eingeprägt, kann das Einprägen der Struktur kann insbesondere gleichzeitig mit dem Einprägen der Stufenrille(n) und gegebenenfalls der Geradrille(n) erfolgen. Ferner kann eine Struktur auch mit einer Strukturgeberfolie oder einem Stahlband oder mittels Laser oder durch mechanische Abtragung erzeugt werden. Alternativ oder zusätzlich kann eine Kantenleiste mit einer Struktur auch dadurch erhalten werden, dass das gerillte Band oder der geformte Grundkörper mit einem Strukturlack versehen wird. Auf diese Art können insbesondere erhabene Strukturen erhalten werden. Alternativ können erhabene Strukturen auch mittels einer Folie aufgebracht werden. Dies kann vorteilhafterweise dann erfolgen, wenn auf das Band oder auf das gerillte Band ein Dekor mit einer Transferfolie aufgebracht wird. Die Struktur wird dabei so auf den Grundkörper, auf das Band oder auf das gerillte Band, jeweils insbesondere auf die Oberseite, aufgebracht, dass das für die voranstehend zur Gleichheit oder Verschiedenheit der Struktur im Übergangsabschnitt und auf der Oberseite des restlichen Grundkörpers der erfindungsgemäßen Kantenleiste Gesagte für die gemäß der zweiten Alternative des erfindungsgemäßem Verfahrens hergestellten Kantenleisten entsprechend gilt.

Ferner kann in der zweiten bevorzugten Alternative des erfindungsgemäßen Verfahrens auch der Glanz der Kantenleiste eingestellt werden. So können glänzende oder matte Kantenleisten hergestellt werden. Glanz kann insbesondere durch Aufbringen eines Glanzlacks auf den Grundkörper erreicht werden. Glanz kann ferner auch durch Aufbringen eines Glanzlacks auf das Band oder das gerillte Band erreicht werden. Der Glanz wird dabei so auf den Grundkörper, auf das Band oder auf das gerillte Band, jeweils insbesondere auf die Oberseite, aufgebracht, dass das voranstehend zur Gleichheit oder Verschiedenheit des Glanzes im Übergangsabschnitt und auf der Oberseite des restlichen Grundkörpers der erfindungsgemäßen Kantenleiste Gesagte für die gemäß der zweiten Alternative des erfindungsgemäßem Verfahrens hergestellten Kantenleisten entsprechend gilt.

Gemäß einer dritten bevorzugten Alternative des erfindungsgemäßen Verfahrens können erfindungsgemäße Kantenleisten auch dadurch erhalten werden, dass zunächst ein Kantenband extrudiert oder coextrudiert wird, das keinen Übergangsabschnitt aufweist. Das Kantenband weist bevorzugt die Breite des Grundkörpers auf. Ein Übergangsabschnitt kann dann mittels spanender Bearbeitung, insbesondere durch Fräsen, des Kantenbands erhalten werden, um einen Grundkörper zu formen.

Alternativ zu der spanenden Bearbeitung, insbesondere dem Fräsen, des Kantenbands, um einen Grundkörper zu formen, kann das Kantenband auch thermisch mit Hilfe eines Lasers behandelt werden. Durch diese thermische Behandlung mit Hilfe eines Lasers kann dann ein Grundkörper mit einem Übergangsabschnitt geformt werden.

Als weitere Alternative zu der spanenden Bearbeitung, insbesondere dem Fräsen, des Kantenbands, um einen Grundkörper zu formen, kann das Kantenband auch mit einem Medienstrahl, insbesondere einem Wasserstrahl, behandelt werden. Durch die Behandlung mit dem Medienstrahl, insbesondere dem Wasserstrahl, kann ein Übergangsabschnitt erhalten werden.

Für das Aufbringen eines Dekors und/oder einer Struktur und/oder von Glanz auf den gemäß der dritten bevorzugten Alternative des erfindungsgemäßen Verfahrens geformten Grundkörper gilt das für das Aufbringen eines Dekors und/oder einer Struktur auf das Kantenprofil gemäß der ersten oder zweiten Alternative des erfindungsgemäßen Verfahrens Gesagte entsprechend. Vorzugsweise werden ein Dekor und/oder eine Struktur und/oder Glanz gemäß der dritten bevorzugten Alternative auf den Grundkörper aufgebracht. Bei Aufbringen von Dekor und/oder Struktur und/oder Glanz auf das Kantenband, das noch keinen Übergangsabschnitt aufweist, können diese insbesondere im Bereich des Übergangsabschnitts entfernt werden.

Gemäß einer vierten Alternative des erfindungsgemäßen Verfahrens wird der Grundkörper durch Spritzguss geformt. Dabei kann das für den Spritzguss verwendete Werkzeug so ausgestaltet sein, dass der Grundkörper beim Spritzgießen mit einer Struktur versehen wird. Nach dieser Alternative des erfindungsgemäßen Verfahrens wird der Grundkörper unmittelbar geformt. Der Grundkörper kann die Kantenleiste bilden oder er kann anschließend mit einem Dekor, einer Struktur und/oder Glanz versehen werden, um die Kantenleiste zu bilden. Ferner kann auch eine Dekorfolie in das Spritzgusswerkzeug eingelegt werden, die anschließend hinterspritzt wird. Dadurch kann eine Kantenleiste mit einem Dekor direkt beim Spritzgießen erhalten werden. Hierfür gilt insbesondere das vorstehend zum Dekor, zur Struktur und zum Glanz für die erste, die zweite oder die dritte Ausführungsform des erfindungsgemäßen Verfahrens Gesagte entsprechend. Der Spritzguss eignet sich insbesondere zur Herstellung von Kleinstmengen. Eine Struktur an der Oberseite kann beim Spritzgießen auch direkt im Spritzgusswerkzeug erzeugt werden.

Im erfindungsgemäßen Verfahren kann auch mindestens eine stufenförmige Vertiefung in den Grundkörper oder in die Kantenleiste eingebracht werden. Vorzugsweise wird die mindestens eine stufenförmige Vertiefung in den Grundkörper eingebracht bevor ein Dekor und/oder eine Struktur und/oder Glanz aufgebracht werden.

Vorzugsweise weist die mindestens eine stufenförmige Vertiefung dasselbe Stufenprofil wie eine hierin im Zusammenhang mit der zweiten Alternative des erfindungsgemäßen Verfahrens beschriebene Stufenrille auf, ist allerdings in Querrichtung orientiert. Die mindestens eine stufenförmige Vertiefung kann durch Einprägen, durch Zerspanen, mittels Laser oder mit einem Medienstrahl, beispielsweise einem Wasserstrahl, hergestellt werden. Die mindestens eine stufenförmige Vertiefung kann auch bei der Herstellung der Kantenleiste mittels Spritzguss unmittelbar hergestellt werden. Vorzugsweise wird die mindestens eine stufenförmige Vertiefung in regelmäßigen Abständen in den Grundkörper eingebracht, beispielsweise alle 60 cm oder mehr. Denkbar ist jedoch auch, dass die stufenförmige Vertiefung beim Ablängen der Kantenleiste an das Möbelstück in den Grundkörper eingebracht wird. In diesem Fall kann ein Dekor auch erst nach dem Anbringen der Kantenleiste an eine Möbelplatte auf den Grundkörper aufgebracht werden.

Ein stufenförmiger Abschluss an den Enden in Längsrichtung des Grundkörpers kann beispielsweise bei der Herstellung des Grundkörpers bzw. der Kantenleiste mittels Spritzguss realisiert werden.

Ferner stellt die Erfindung auch eine Prägewalze bereit, mit der gemäß dem erfindungsgemäßen Verfahren gerillte Bänder, Grundkörper und/oder Kantenleisten in einer Prägevorrichtung mit einem voreingestellten Walzspalt hergestellt werden können, umfassend einen Walzenballen mit einer Walzenoberfläche und mindestens eine auf der Walzenoberfläche verlaufende erhabene Rippenstruktur zum Einprägen von wenigstens einer Einprägung in ein Band, wobei die Rippenstruktur eine Rippenhöhe sowie quer zur Umfangsrichtung des Walzenballens einen stufenförmigen Querschnitt aufweist, der auf mindestens einer Seite der Rippenstruktur mindestens zwei Stufen mit jeweils einer oberseitigen Fläche und einer randseitigen Fläche pro Stufe aufweist, wobei vorzugsweise die oberseitigen Flächen unabhängig voneinander bezüglich der Walzenoberfläche so ausgerichtet sind, dass die kleinsten Winkel der oberseitigen Flächen bezüglich der Walzenoberfläche jeweils im Mittel von -45° bis 75°, insbesondere von -45° bis 45°, betragen und wobei vorzugsweise die randseitigen Flächen unabhängig voneinander bezüglich der Walzenoberfläche so geneigt sind, dass die kleinsten Winkel der randseitigen Flächen bezüglich der Walzenoberfläche im Mittel von 20° bis weniger 90°, insbesondere von 46° bis weniger 90°, insbesondere bis 80°, betragen, und wobei die Höhe des Walzspalts von der Walzenoberfläche gemessen wird und die Rippenhöhe mindestens 70% der Höhe des Walzspalts beträgt.

Die Rippenhöhe kann ferner mindestens 80% der Höhe des Walzspalts betragen. Zweckmäßigerweise ist die Rippenhöhe so gewählt, dass ein mit der Walze geprägtes Werkstück, beispielsweise ein gerilltes Band, an der tiefsten Einprägung eine Dicke von 3 mm oder weniger, bevorzugt von 1 µm bis 1 mm, weiter bevorzugt von 10 µm bis 500 µm, besonders bevorzugt von 50 bis 100 µm, aufweist. Hierbei kann eine Durchprägevorrichtung, beispielsweise ein Messerkragen, der vorteilhafterweise mittig auf der Rippenstruktur in Umfangsrichtung angeordnet ist, unterstützen. Dadurch kann das Auftrennen der mit der Prägewalze hergestellten gerillten Bänder erleichtert werden.

Für die oberseitige Fläche der ersten Stufe der Rippenstruktur mit stufenförmigem Querschnitt der erfindungsgemäßen Prägewalze gilt das für die oberseitige Fläche der ersten Stufe der erfindungsgemäßen Kantenleiste Gesagte entsprechend.

Für die oberseitigen Flächen der auf die erste Stufe nachfolgende(n) Stufe(n) der Rippenstruktur mit stufenförmigem Querschnitt der erfindungsgemäßen Prägewalze gilt das für die auf die erste Stufe nachfolgende(n) Stufe(n) der erfindungsgemäßen Kantenleiste Gesagte entsprechend.

Für die randseitigen Flächen der auf die erste Stufe nachfolgende(n) Stufe(n) der Rippenstruktur mit stufenförmigem Querschnitt der erfindungsgemäßen Prägewalze gilt das für die randseitigen Flächen der erfindungsgemäßen Kantenleiste Gesagte entsprechend.

Die Rippenstruktur mit stufenförmigem Querschnitt kann auf einer Seite oder auf beiden Seiten einen stufenförmigen Querschnitt aufweisen. Der stufenförmige Querschnitt kann auf beiden Seiten identisch sein oder auf beiden Seiten unterschiedlich sein.

Die Prägewalze kann ferner eine oder mehrere weitere Rippenstrukturen aufweisen, die einen im Wesentlichen geraden Querschnitt oder einen Stufenquerschnitt aufweisen. Die Prägewalze kann nun so ausgestaltet sein, dass die Rippenstruktur(en) mit stufenförmigem Querschnitt und gegebenenfalls die Rippenstruktur(en) mit geradem Querschnitt fest auf der Prägewalze angebracht sind. Mit einer solchen Prägewalze können Kantenleisten mit einer festen Breite hergestellt werden. Durch auf der Prägewalze angeordnete benachbarte Rippenstrukturen mit stufenförmigem Querschnitt können entsprechend Kantenleisten mit zwei an gegenüberliegenden Seiten angeordneten Übergangsabschnitten hergestellt werden.

Denkbar ist auch, dass Prägesegmente mit unterschiedlichen Rippenstruktur(en) mit stufenförmigem Querschnitt und gegebenenfalls mit geradem Querschnitt auf eine Trägerwalze aufgebracht, insbesondere aufgeschoben, werden, die zusammen den Mantel der Prägewalze bilden. Zusätzlich zu den Prägesegmenten können auch Abstandshalter auf die Trägerwalze aufgebracht werden. Dadurch kann die Breite der Kantenleiste(n) eingestellt werden.

Das Aufbringen der Prägesegmente kann beispielsweise durch Aufschieben von Ringsegmenten auf eine Trägerwalze erfolgen.

Zusätzlich kann die Prägewalze Prägeelemente aufweisen, mit denen eine Struktur eingeprägt werden kann.

Es gibt nun eine Vielzahl von Möglichkeiten, die erfindungsgemäße Kantenleiste und das erfindungsgemäße Verfahren auszugestalten und weiterzubilden. Diesbezüglich sei verwiesen auf die Beschreibung von Ausführungsbeispielen in Verbindung mit den Zeichnungen. In den Zeichnungen zeigen:
- Fig. 1a bis 1e: schematische Darstellungen in Seitenansicht verschiedener Ausgestaltungen der erfindungsgemäßen Kantenleiste mit einem Übergangsabschnitt, wobei in jeder Ausgestaltung der Kantenleiste die oberseitige Fläche der ersten Stufe breiter ist als die oberseitige Fläche der nachfolgenden Stufe(n),
- Fig. 2: eine schematische Darstellung der erfindungsgemäßen Kantenleiste aus Fig. 1a in dreidimensionaler Ansicht,
- Fig. 3a bis 3c: eine schematische Darstellung einer erfindungsgemäßen Kantenleiste an einem Möbelstück unmittelbar nach dem Anbringen der Kantenleiste an das Möbelstück (Fig. 3a) und unmittelbar nach dem Entfernen des überstehenden Teils der ersten Stufe (Fig. 3b) sowie eine Vergrößerung der in Fig. 3a umkreisten Stelle (Fig. 3c),
- Fig. 4: eine schematische Darstellung der Herstellung einer erfindungsgemäßen Kantenleiste nach der ersten Alternative des erfindungsgemäßen Verfahrens mittels Profilextrusion,
- Fig. 5: eine schematische Darstellung der Herstellung einer erfindungsgemäßen Kantenleiste nach der 2. Alternative des erfindungsgemäßen Verfahrens mittels Prägen,
- Fig. 6a und b: schematische Darstellungen der Herstellung einer erfindungsgemäßen Kantenleiste mittels Spritzguss in zwei verschiedenen Querschnitten des Spritzgusswerkzeugs, wobei die Kantenleiste an ihren Enden in Längsrichtung jeweils einen stufenförmigen Abschluss aufweist,
- Fig. 7: eine schematische Darstellung einer erfindungsgemäßen Prägewalze, die einen mittig auf der Rippenstruktur in Umfangsrichtung angeordneten Messerkragen aufweist,
- Fig. 8a bis 8c: zeigen eine schematische Darstellung einer erfindungsgemäßen Kantenleiste an einem Möbelstück unmittelbar nach dem Anbringen der Kantenleiste an das Möbelstück (Fig. 8a) und unmittelbar nach dem Entfernen des überstehenden Teils der ersten Stufe (Fig. 8b) sowie eine Vergrößerung der in Fig. 8a umkreisten Stelle (Fig. 8c). Die Kantenleiste in Fig. 8a bis 8c weist im Übergangsabschnitt ein gerundetes Profil und kein schräges Profil auf,
- Fig. 9a bis 9c: zeigen eine schematische Darstellung einer erfindungsgemäßen Kantenleiste an einem Möbelstück unmittelbar nach dem Anbringen der Kantenleiste an das Möbelstück (Fig. 9a) und unmittelbar nach dem Entfernen des überstehenden Teils der ersten Stufe (Fig. 9b) sowie eine Vergrößerung der in Fig. 9a umkreisten Stelle (Fig. 9c). Die Kantenleiste in Fig. 9a bis 9c weist im Übergangsabschnitt ein gerundetes Profil und kein schräges Profil auf. Die Kantenleiste weist ferner Stufen mit einer gewellten Form auf.

Nachfolgend angegebene Winkel der Flächen sind mit Bezug zu der ungekrümmten Ebene zwischen den die Unterseite definierenden Rändern angegeben.

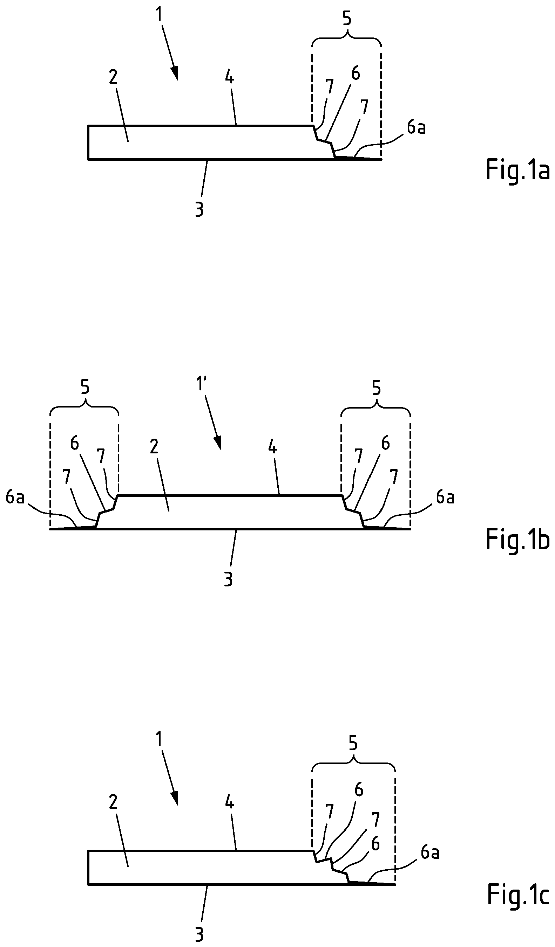

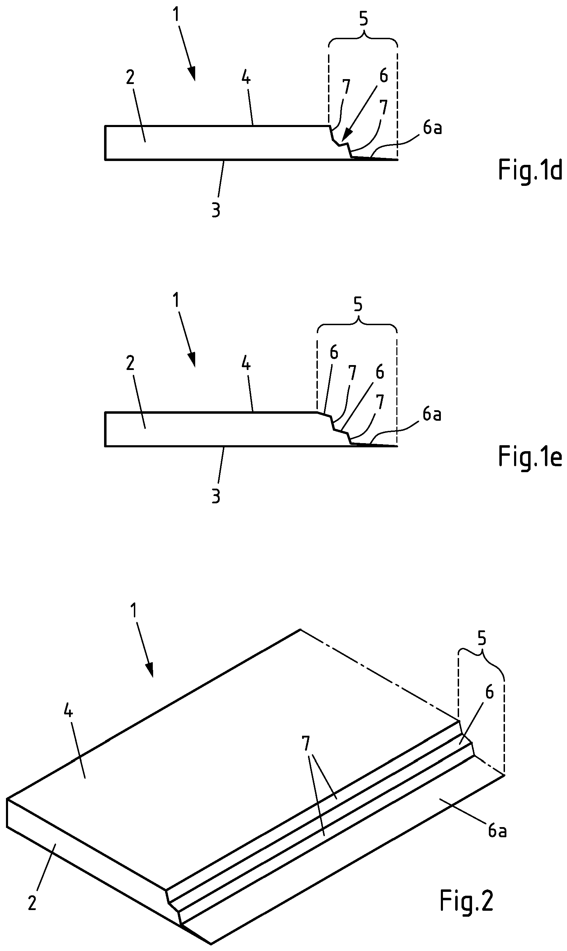

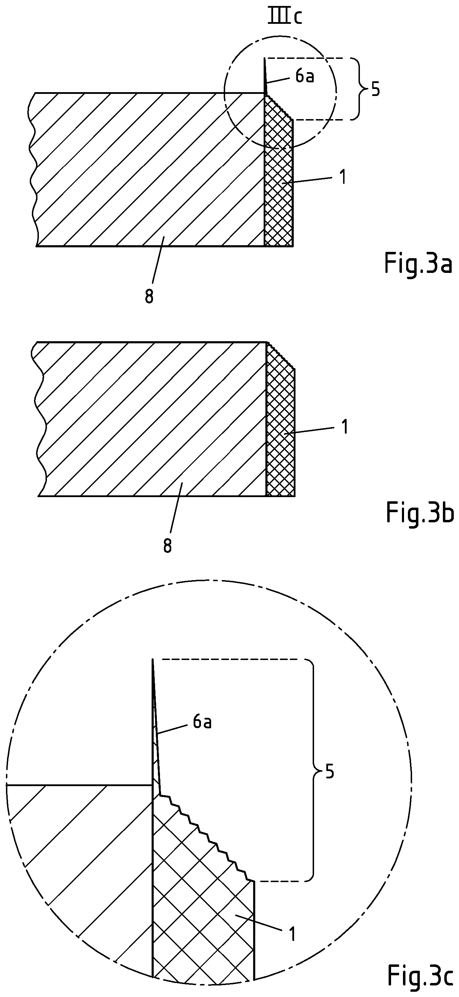

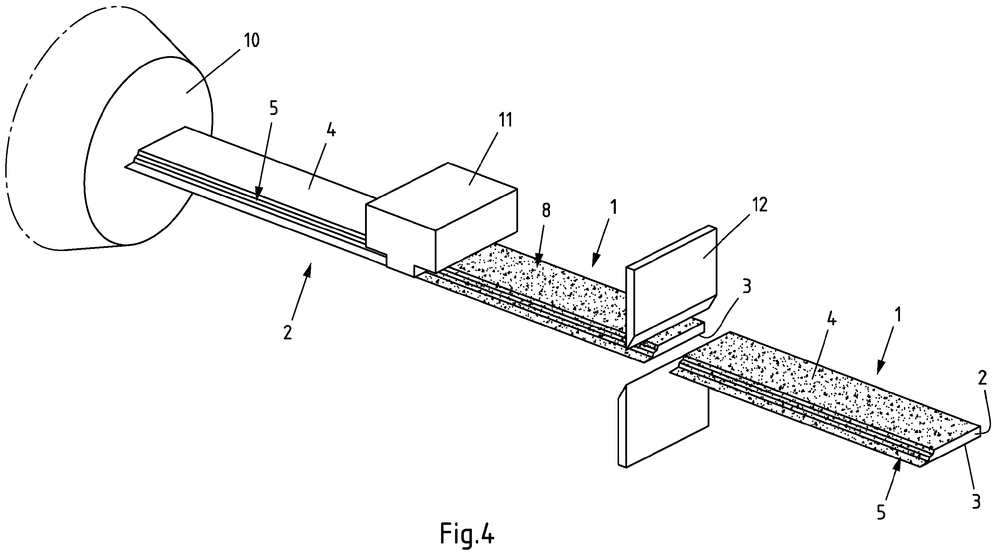

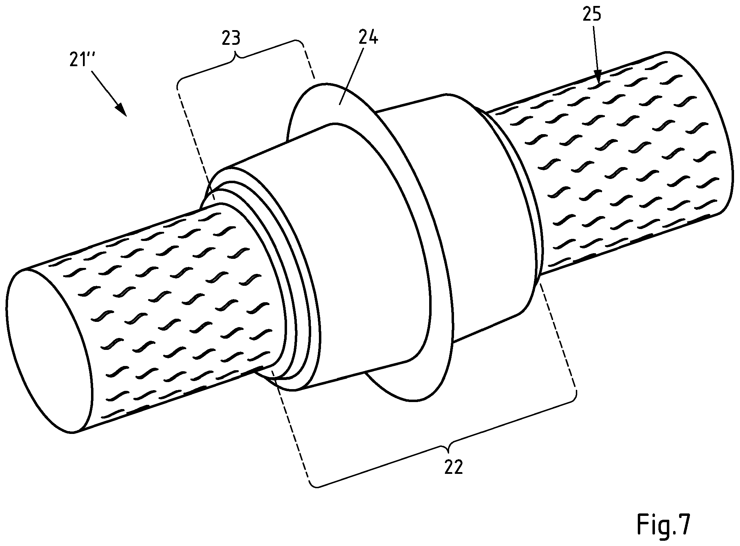

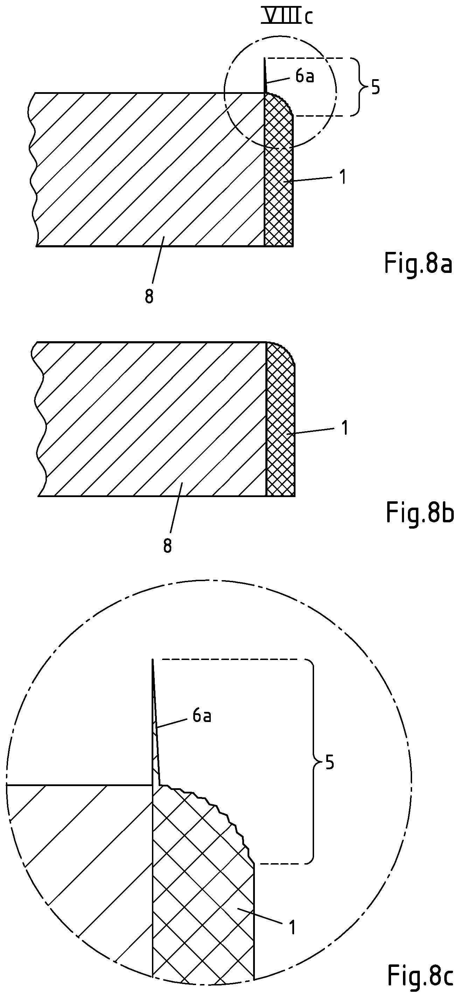

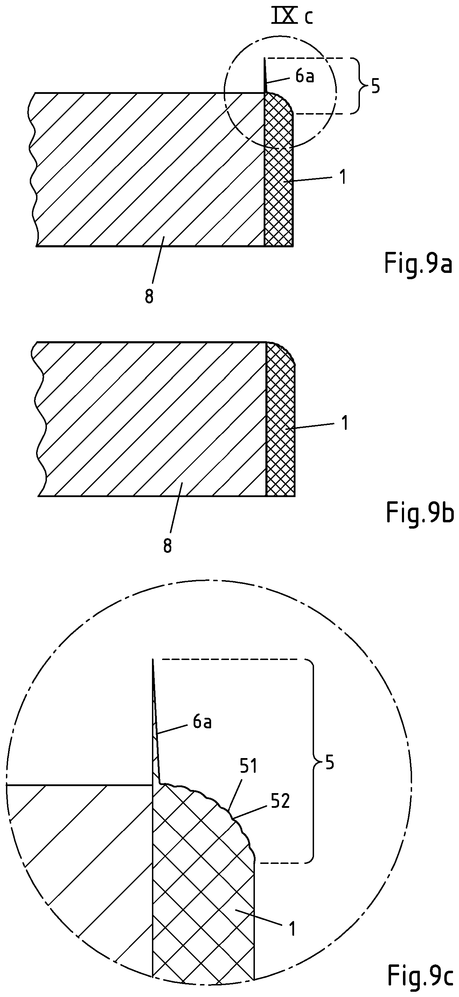

In den Figuren 1a bis 1e und 2 sind beispielhaft bevorzugte Ausführungsformen der Kantenleisten 1 und 1' in Seitenansicht und der Kantenleiste 1 in dreidimensionaler Darstellung dargestellt, bei der die oberseitige Fläche der ersten Stufe breiter ist als die oberseitige Fläche der nachfolgen Stufe(n). Die Figuren 3a bis 3c zeigen die bevorzugte Ausführungsform der Kantenleiste 1 der Figuren 1a bis 1e und 2, bei der also ebenfalls die oberseitige Fläche der ersten Stufe breiter ist als die oberseitige Fläche der nachfolgenden Stufen, die aber eine größere Anzahl Stufen aufweist als die Kantenleiste in den Figuren 1a bis 1e und 2 und die an ein Möbelstück angebracht ist. Die Figuren 4, 5 und 6 zeigen verschiedene Ausgestaltungen des erfindungsgemäßen Verfahrens. Figur 7 zeigt eine erfindungsgemäße Prägewalze. Die Figuren 8a bis 8c zeigen eine Variante zu der Kantenleiste der Figuren 3a bis 3c mit abgerundetem Übergangsabschnitt 5. Die Figuren 9a bis 9c zeigen eine Variante der Kantenleiste der Figuren 8a bis 8c, bei der die Stufen eine gewellte Form aufweisen. In den übrigen Figuren weisen die Stufen eine zackige Form auf.

Im Folgenden werden zunächst die Ausführungsbeispiele der Kantenleiste 1, 1' gemäß den Figuren 1a bis 3c sowie 8a bis 9c erläutert.

Den Kantenleisten 1, 1' der Figuren 1a bis 3c sowie 8a bis 9c ist gemeinsam, dass sie einen Grundkörper 2 mit einer Unterseite 3 und einer von der Unterseite 3 abgewandten Oberseite 4 aufweisen. Die Kantenleisten 1, 1' weisen eine konkave Form mit einer Auswölbung von 0,15 mm über ihre Breite auf.

Die Oberseite 4 weist ferner zumindest einen zu einem Rand des Grundkörpers 3 hin abfallenden Übergangsabschnitt 5 auf. Dies ist in den Figuren 1a, 1c, 1d, 2, 3a, 3b, 3c und 8a bis 9c für die Kantenleiste 1 gezeigt. Denkbar ist es allerding auch, dass die Oberseite 4 zwei zu gegenüberliegenden Rändern des Grundkörpers 3 hin abfallende Übergangsabschnitte 5 aufweist, wie in Figur 1b für die Kantenleiste 1' gezeigt.

Die Kantenleisten 1, 1' der Figuren 1a bis 3c sowie 8a bis 9c umfassen einen Kunststoff. Als Kunststoffe kommen Acrylnitril-Butadien-Styrol-Copolymer, Polyethylen, vernetztes Polyethylen (PE-X), Polypropylen, Polyamid, Polyvinylchlorid, Polycarbonat, Styrolbutadien, Polyethylenterephthalat, Polymethylmetacrylat, wood-plastic-composite (WPC) oder Mischungen davon in Frage.

Die Oberseite 4 der Kantenleisten 1, 1' in den Figuren 1a bis 3c sowie 8a bis 9c ist einschließlich im Übergangsabschnitt 5 mit einem Dekor vollflächig bedeckt. Das Dekor ist dabei durch Digitaldruck aufgedruckt worden. Das Dekor ist über die Oberfläche 4 der Kantenleiste einschließlich im Übergangsbereich 5 einheitlich.

Wie in den Figuren 1a bis 1e und 2 zu erkennen ist, fällt der Übergangsabschnitt 5 stufenförmig zum Rand des Grundkörpers 2 ab, wobei der Übergangsabschnitt 5 mehrere Stufen, insbesondere eine erste Stufe mit einer oberseitigen Fläche 6a und einer randseitigen Fläche 7 sowie mindestens eine zweite Stufen mit einer oberseitigen Fläche 6 und einer randseitigen Fläche 7 aufweist. Es ist jedoch auch denkbar, dass der Übergangsabschnitt 5 mehr als zwei Stufen umfasst, wie in den Figuren 3a bis 3c sowie in den Figuren 8a bis 9c dargestellt. In Figuren 9a bis 9c sind die Stufen mit gewellter Form in der Art eines Kreisausschnitts dargestellt. Die Länge des Kreisausschnitts der Stufen mit gewellter Form sind in den Figuren 9a bis 9c gleichlang. Sie können aber auch unterschiedlich lang sein.

Der Übergangsabschnitt endet in den Figuren 1a, 1b, 1c, 1d, 2, 3a bis 3c und 8a bis 8c mit einer randseitigen Fläche 7. Der Übergangsabschnitt kann jedoch auch wie in Figur 1e gezeigt mit einer oberseitigen Fläche 6 enden. Der Übergangsabschnitt kann auch mit einer Stufe mit gewellter Form enden, wie in den Figuren 9a bis 9c gezeigt.

Die oberseitige Fläche 6a der ersten Stufe ist in den Kantenleisten 1, 1' in den Figuren 1a bis 3a, 3c, 8a und 8c mehr als dreimal breiter als die oberseitigen Flächen 6 der nachfolgenden Stufen. Es ist aber auch denkbar, dass die oberseitige Fläche 6a der ersten Stufe genauso breit ist wie die oberseitige(n) Fläche(n) der nachfolgende(n) Stufe(n).

In den Figuren 9a und 9c sind die Neigungen der oberseitigen Flächen 6 und der randseitigen Flächen 7 der Stufen mit gewellter Form durch die Verbindungslinien zwischen den höchsten Punkten der Wellenberge 51 und den tiefsten Punkten der Wellentäler 52 festgelegt. In Figur 9c ist beispielhaft jeweils nur ein Wellenberg 51 und ein Wellental 52 beschriftet. Es versteht sich jedoch, dass in Figur 9c mehrere Wellenberge 51 und Wellentäler 52 gezeigt sind. In den Figuren 9a und 9c ist die oberseitige Fläche 6a der ersten Stufe in der Kantenleiste 1 mehr als dreimal breiter als die oberseitigen Flächen 6 der nachfolgenden Stufen. Es ist aber auch denkbar, dass die oberseitige Fläche 6a der ersten Stufe genauso breit ist wie die oberseitige(n) Fläche(n) der nachfolgende(n) Stufe(n).

Die Kantenleisten 1, 1' in den Figuren 1a bis 3a, 3c, 8a, 8c, 9a und 9c sind zudem am Übergang von der oberseitigen Fläche 6a der ersten Stufe zur randseitigen Fläche 7 der ersten Stufe dünn. Insbesondere weisen sie eine Dicke von 0,05 bis 0,35 mm auf. Wie aus den Figuren 3a bis 3c und 8a bis 9c hervorgeht, können mit einer Kantenleiste 1, 1', bei der die oberseitige Fläche 6a breiter ist als die oberseitigen Flächen 6 der nachfolgenden Stufen auf einfache Weise fertigungsbedingte Unterschiede in der Dicke des Möbelstücks, an das die Kantenleiste 1 angebracht wird, ausgeglichen werden. Besonders vorteilhaft ist, dass zum bündigen Anpassen der Kantenleiste 1 in den Figuren 3a,8a und 9a nur die dünne erste Stufe 6a abgetragen werden muss. Dies wird in den Figuren 3c, 8c und 9c deutlich, die jeweils Vergrößerungen der in den Figur 3a, 8a bzw. 9a umkreisten Bereiche zeigen. Im Falle der Kantenleiste 1', die zwei zu gegenüberliegenden Rändern des Grundkörpers 3 hin abfallende Übergangsabschnitte 5 aufweist, müssen zum bündigen Anpassen zwei dünne erste Stufen abgetragen werden. Dadurch wird im Übergangsabschnitt 5 nur ein schmaler Abschnitt ohne Dekor erzeugt, wodurch sich der optische Eindruck der Kantenleisten 1, 1' nicht wesentlich ändert. Zudem wird so ein im Wesentlichen fließender Übergang von der Kantenleisten 1, 1' zum Möbelstück gewährleistet. Die Kantenleiste 1' lässt sich sowohl auf der Ober- als auch auf der Unterseite des Möbelstücks sehr genau bündig anpassen.

Ferner weisen die oberseitigen Flächen 6 und die randseitigen Flächen 7 der auf die erste Stufe nachfolgenden Stufen in den Figuren 3a und 3b dieselbe Breite auf. Dadurch weist die Kantenleiste 1 im Übergangsabschnitt 5 eine Fase auf. Die Kantenleiste 1' weist entsprechend zwei Fasen auf. Indem die Breiten der oberseitigen Flächen 6 und der randseitigen Flächen 7 im Übergangsabschnitt 5 der Kantenleisten 1, 1' variiert werden, können auch anders geformte, insbesondere gerundete Übergangsabschnitte 5 erzielt werden.

Eine Kantenleiste 1 mit abgerundetem Übergangsabschnitt 5 an einer Möbelplatte ist in den Figuren 8a bis 8c gezeigt. Der Übergangsabschnitt 5 aus Figur 8a ist in Figur 8c vergrößert dargestellt. Im Übergangsabschnitt 5 der Figuren 8a bis 8c weisen die auf die erste Stufe folgenden oberseitigen Flächen 6 teilweise unterschiedliche Breiten auf. Ferner weisen die oberseitigen Flächen 6, 6a und die randseitigen Flächen 7 unterschiedliche Neigungen auf. Auf diese Weise kann der abgerundete Übergangsabschnitt 5 realisiert werden. Dabei sind die randseitigen Flächen 7 so geneigt, dass die kleinsten Winkel der randseitigen Flächen 7 bezüglich der an der Möbelplatte angebrachten Unterseite im Mittel von 46° bis weniger 90° betragen. Die oberseitigen Flächen 6, 6a sind in den Figuren 8a bis 8c bezüglich der Unterseite so geneigt, dass die kleinsten Winkel der oberseitigen Fläche 6, 6a bezüglich der Unterseite 3 jeweils im Mittel größer als 0° und kleiner als 45° sind. Im Unterschied zu Figur 8a zeigt Figur 8b die Kantenleiste 1 an der Möbelplatte nach dem Entfernen des überstehenden Teils der ersten Stufe.

In den Figuren 9a bis 9c ist eine Variante der Kantenleiste 1 aus den Figuren 8a bis 8c mit abgerundetem Übergangsabschnitt 5 an einer Möbelplatte gezeigt, wobei die Stufen des Übergangsabschnitts 5 eine gewellte Form aufweisen. Die Stufen mit gewellter Form folgen dabei aufeinander. Jede Stufe mit gewellter Form weist einen Wellenberg 51 auf, der in Figur 9c beispielhaft für eine Stufe gezeigt ist. Zwischen aufeinanderfolgenden Stufen liegt je ein Wellental 52, das in Figur 9c beispielhaft für eine Stufe gezeigt ist. Der tiefste Punkt eines Wellentals 52 ist vorzugsweise der Punkt, an dem sich zwei aufeinanderfolgende Stufen mit gewellter Form berühren. In den Figuren 9a bis 9c sind die Stufen mit gewellter Form in der Art von Kreisausschnitten dargestellt. Der tiefste Punkt eines Wellentals 52 in Figur 9c ist damit vorzugsweise der Punkt, an dem sich zwei Kreisausschnitte berühren. Wie oben beschrieben werden vorzugsweise die kleinsten Winkel der Stufen mit gewellter Form bezüglich der Unterseite jeweils ausgehend von den Verbindungslinien von den Wellenbergen 51 zu den tiefsten Punkten der Wellentäler 52 gemessen.

Die oberseitigen Flächen 6, 6a sind in den Figuren 1a, 1b, 1e, 2, 3a, 3b und 3c bezüglich der Unterseite so geneigt, dass die kleinsten Winkel der oberseitigen Fläche 6, 6a bezüglich der Unterseite 3 jeweils im Mittel größer als 0° und kleiner als 45° sind. Alle oberseitigen Flächen 6 weisen dabei denselben Winkel auf. Durch eine stärkere Neigung der oberseitigen Flächen 6, 6a kann die Anzahl der Stufen im Übergangsabschnitt 5 reduziert werden. In Figur 1c weisen die oberseitigen Flächen 6, 6a unterschiedliche Winkel bezüglich der Unterseite 3 auf. Dabei liegt der Winkel der oberseitigen Fläche 6 der zweiten Stufe in einem Bereich von 10° bis 45° und der Winkel der oberseitigen Fläche 6 der dritten Stufe in einem Bereich von -10° bis -45°. In Figur 1d ändert sich der Winkel der oberseitigen Fläche 6 der zweiten Stufe, liegt jedoch im Mittel in einem Bereich von 5° bis 45°. Auf diese Weise kann eine Näpfchenstruktur realisiert werden, die ein aufgedrucktes Dekor gut behält.

Die randseitigen Flächen 7 sind bezüglich der Unterseite 3 so geneigt, dass die kleinsten Winkel der randseitigen Flächen 7 bezüglich der Unterseite 3 im Mittel von 46° bis weniger 90°, insbesondere bis 80°, betragen. Durch diese Neigung der randseitigen Flächen 7 können sie einfacher in Digitaldruckverfahren, insbesondere im Inkjet-Druck, mit einem Dekor bedruckt werden.

Die oberseitigen Flächen 6, 6a und die randseitigen Flächen 7 weisen in den Figuren 1a bis 3c und 8a bis 8c ferner eine Rauhigkeit von 10 µm auf. Dadurch wird ein glatt-matter Eindruck der Kantenleiste erzeugt. In den Figuren 9a bis 9c weisen die Stufen mit gewellter Form eine Rauhigkeit von 10 µm auf. Dadurch wird ein glatt-matter Eindruck dieser Kantenleiste erzeugt.

In den Figuren 3a bis 3c und den Figuren 8a bis 9c weist die Unterseite 3 der Kantenleiste 1 zudem eine Schicht auf, die andersfarbig, insbesondere dunkler, gehalten ist als die Farbe des Grundkörpers 2. Dadurch ist der Farbunterschied zwischen der abgearbeiteten ersten Stufe und dem auf die Kantenleiste 1 aufgedruckten Dekor gering. Dies kann auch durch eine mehrschichtige, insbesondere eine zweischichtige, Kantenleiste 1 erreicht werden, bei der die die Unterseite 3 enthaltende Schicht am dunkelsten ist. Die Unterseite 3 weist ferner eine Schmelzschicht auf.

Die Figuren 4, 5 und 6 zeigen verschiedene Ausgestaltungen des erfindungsgemäßen Verfahrens zur Herstellung der erfindungsgemäßen Kantenleiste 1. In allen Ausgestaltungen wird dabei eine Kantenleiste 1 aus einem Material, das aus einem Kunststoff besteht, hergestellt. Als mögliche Kunststoffe kommen dabei die oben genannten Kunststoffe in Frage.

Allen Ausgestaltungen ist gemein, dass der Grundkörper 2 aus einem Kunststoff geformt wird. Der Grundkörper 2 wird in Form eines Endlosbandes geformt. Der geformte Grundkörper 2 weist dabei eine Unterseite 3, die an ein Möbelstück anlegbar ist, eine von der Unterseite 3 abgewandte Oberseite 4 sowie einen zu einem Rand des Grundkörpers 2 hin abfallenden Übergangsabschnitt 5 auf.

Der Übergangsabschnitt 5 des geformten Grundkörpers 2 fällt stufenförmig zum Rand des Grundkörpers 2 ab und weist dabei beispielhaft mindestens zwei Stufen mit jeweils einer oberseitigen Fläche und einer randseitigen Fläche pro Stufe auf, wobei die oberseitigen Flächen unabhängig voneinander bezüglich der Unterseite 3 so geneigt sind, dass die kleinsten Winkel der oberseitigen Flächen bezüglich der Unterseite 3 im Mittel jeweils 20° betragen und wobei die randseitigen Flächen unabhängig voneinander bezüglich der Unterseite 3 so geneigt sind, dass die kleinsten Winkel der randseitigen Flächen bezüglich der Unterseite 3 im Mittel jeweils 75° betragen.

Dabei sei für die möglichen Ausgestaltungen des Grundkörpers 2, insbesondere des Übergangsabschnitts 5 sowie der oberseitigen Fläche der ersten Stufe, auf die Ausführungen zur erfindungsgemäßen Kantenleiste 1 weiter oben verwiesen.

In Figur 4 wird nun der Grundkörper 2 unmittelbar durch Profilextrusion mit Extruder 10 geformt. Vorteilhaft an dieser Ausgestaltung ist, dass hierdurch Kantenleisten 1 in kleinen Mengen kostengünstig herstellbar sind.

Dieser Grundkörper 2 wird anschließend mit einem Dekor 8 versehen. In Figur 4 wird das Dekor 8 mittels Digitaldruck durch den Digitaldruckkopf 11, bevorzugt einen Inkjet-Druckkopf, aufgebracht. Dabei kann der Digitaldruckkopf 11 auch geneigt sein, um den Übergangsabschnitt 5 des Grundkörpers 2 besser bedrucken zu können. Es können auch mehrere Druckköpfe 11 mit unterschiedlicher Neigung eingesetzt werden, um einen optimalen optischen Eindruck der Kantenleiste 1 zu erzielen. Das Dekor 8 ist dabei auf der Oberseite 4 des Grundkörpers 2 einschließlich im Übergangsabschnitt 5 einheitlich und bedeckt die Oberseite 4 des Grundkörpers 2 der Kantenleiste 1 vollflächig.

Falls gewünscht kann der Grundkörper 2 an der Oberseite 4 zusätzlich oder anstelle des Dekors 8 mit einer Struktur versehen werden. Eine Struktur kann beispielsweise in Form von Vertiefungen mittels einer Prägewalze in die Oberseite 4 des Grundkörpers 2 eingeprägt werden. Erhabene Strukturen können mittels Strukturlack auf die Oberseite 4 des Grundkörpers 2 aufgebracht werden. Zum Aufbringen des Strukturlacks kann ein Druckkopf, beispielsweise ein Digitaldruckkopf, eingesetzt werden. Denkbar ist ebenfalls, erhabene Strukturen durch Aufbringen einer strukturierten Folie auf die Oberseite 4 des Grundkörpers 2 aufzubringen. Vorzugsweise wird der Grundkörper 2 zusätzlich mit einer Struktur versehen, die auf der Oberseite 4 des Grundkörpers der Kantenleiste 1 einschließlich im Übergangsabschnitt 5 einheitlich ist.

Die Kantenleiste 1 wird in Figur 4 durch die Schneidevorrichtung 12 quer zur Extrusionsrichtung in regelmäßigen Abständen geschnitten. Dadurch können beispielsweise Kantenleisten mit gleicher Länge erhalten werden. Die Kanteneiste 1 wird zur Aufbewahrung und zum Transport aufgerollt (nicht gezeigt).

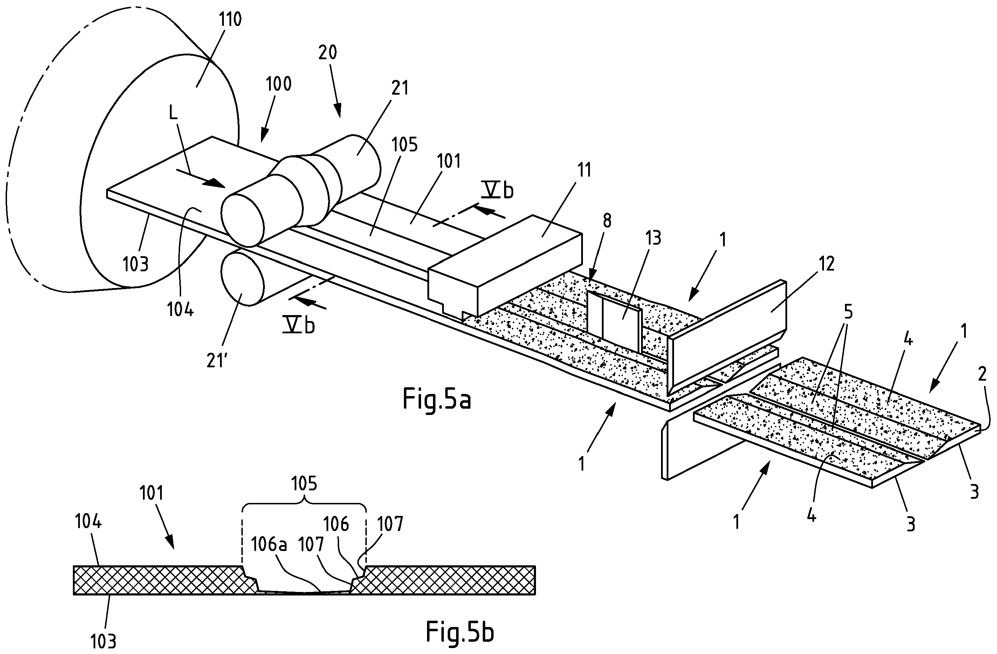

In der in Figur 5a gezeigten Alternative des erfindungsgemäßen Verfahrens wird zunächst ein Band 100 hergestellt, das eine Dicke, eine Längsrichtung L, eine obere Fläche 104 und eine untere Fläche 103 aufweist, aus einem Extruder 110 geformt. In die obere Fläche 104 des Bands 100 wird anschließend in Prägevorrichtung 20 eine Stufenrille 105 eingeprägt. Hierfür ist die Prägevorrichtung 20 mit Walzen 21 und 21' ausgestattet. Walze 21 ist dabei eine Prägewalze, die die Stufenrille 105 in das Band 100 einprägt. Dadurch wird ein gerilltes Band 101 erhalten. Die Prägevorrichtung 20 kann beispielsweise als Kalander ausgestaltet sein.

Das Band 100 wird dabei in Form einer Kunststoffschmelze extrudiert, die zumindest an ihrer oberen Fläche 104 oberhalb ihrer Vicat-Erweichungstemperatur, gemessen nach DIN EN ISO 306:2014-03, Verfahren B50, liegt. Die Prägewalze 21 wird dabei gekühlt. Dadurch wird das gerillte Band 101 abgekühlt, wodurch Strukturen mit sehr guter Maßhaltigkeit in das Band 100 eingeprägt werden können. Vorteilhafterweise umschlingt das gerillte Band 101 die Prägewalze 21 (nicht gezeigt).

Die Stufenrille 105, die in das Band 100 eingeprägt wird, weist eine Stufenrillentiefe und einen stufenförmigen Querschnitt auf. In Figur 5a weist der Querschnitt der Stufenrille 105 auf beiden Seiten der Stufenrille 105 zwei Stufen mit jeweils einer oberseitigen Fläche 106, 106a und einer randseitigen Fläche 107 pro Stufe auf, ist aber lediglich in Form von zwei Schrägen dargestellt. Denkbar ist jedoch, dass der Querschnitt der Stufenrille 105 nur auf einer Seite der Stufenrille Stufen aufweist. Außerdem können auch mehr als eine, insbesondere zwei, fünf, zehn, fünfzehn oder mehr, Stufenrillen 105 in das Band 100 eingeprägt werden. In der Prägevorrichtung kann auch eine Struktur zusätzlich zu der Stufenrille 105 und optionalen Geradrille(n) in das Band 100 eingeprägt werden (nicht gezeigt).

Ein Querschnitt des gerillten Bands 101 entlang der Ebene Vb ist in Figur 5b abgebildet. In Figur 5b weist der Querschnitt der Stufenrille 105 auf beiden Seiten zwei Stufen auf. Die Oberseite 106a der tiefsten eingeprägten Stufe ist 3 mm breit. Die Oberseite 106 der nachfolgenden Stufe weist eine Breite von 0,05 mm auf. Die Oberseite 106a ist somit breiter als die Oberseite 106. Die Oberseiten 106a und 106 weisen bezüglich der unteren Fläche 103 jeweils im Mittel einen Winkel von 20° auf. Die randseitigen Flächen 107 weisen bezüglich der unteren Fläche 103 einen Winkel von 75° auf. Denkbar ist jedoch, dass der Querschnitt mehr Stufen aufweist, beispielsweise mindestens fünf, mindestens zehn oder mindestens zwanzig.

Die Stufenrille 105, die in das Band 100 eingeprägt wird, weist an ihrer dünnsten Stelle eine Dicke von 0,1 mm auf.

Zusätzlich zu der Stufenrille 105 können auch eine oder mehrere, insbesondere zwei, fünf, zehn, fünfzehn oder mehr, Geradrillen in das Band 100 oder in das gerillte Band 101 eingeprägt werden (nicht gezeigt).

In Figur 5a wird auf die Oberseite des gerillten Bands 101 mit dem Druckkopf 11 ein Dekor aufgebracht. Der Druckkopf 11 ist ein Digitaldruckkopf, insbesondere ein Inkjet-Druckkopf. Das Dekor ist dabei über die Oberfläche 104 des gerillten Bands 101 einheitlich. Denkbar ist ferner, dass mit weiteren Druckköpfen ein Strukturlack und/oder ein Glanzlack aufgebracht werden (nicht gezeigt). Es können mehrere Druckköpfe 11 verwendet werden. Diese oder einige davon können auch geneigt sein.

Das gerillte Band 101 wird in Figur 5a anschließend entlang der Längsrichtung L aufgetrennt wodurch zwei Kantenleisten 1 mit geformten Grundkörpern 2 erhalten werden. Hierfür wird in Figur 5a die Schneidevorrichtung 13 verwendet. Das gerillte Band 101 wird dabei an der Stufenrille 105 entlang der Linie mit der größten Stufenrillentiefe geschnitten. Alternativ zum Schneiden kann das gerillte Band 101 auch entlang Stufenrille 105 in Längsrichtung L gerissen werden. Weist das gerillte Band 101 mehrere Stufenrillen 105 und optional eine oder mehrere Geradrillen auf, so wird das gerillte Band 101 in der Schneidevorrichtung 13 entsprechend mehrfach entlang seiner Längsrichtung geschnitten. Die Schnitte erfolgen dabei entlang der Geradrillen sowie entlang der Stufenrillen 105.

In Figur 5a werden die geformten Kantenleisten 1 abschließend in der Schneidevorrichtung 12 quer zur Längsrichtung L in regelmäßigen Abständen geschnitten. Die Kantenleisten 1 werden anschließend zur Lagerung und zum Transport aufgerollt (nicht gezeigt).

Vorteilhaft an der Ausgestaltung nach Figur 5a des erfindungsgemäßen Verfahrens ist, dass in einem Arbeitsgang mehrere Kantenleisten 1 geformt werden können. Die Herstellung der Kantenleisten 1 erfolgt dabei mit einer maximalen Materialausnutzung.

Gemäß einer weiteren, nicht gezeigten Ausgestaltung des erfindungsgemäßen Verfahrens kann auch ein endloses Kantenband extrudiert werden, das in etwa dem Band 100 der Ausgestaltung nach Figur 5a entspricht, jedoch schmaler ist und etwa die Breite einer Kantenleiste 1 aufweist. Eine Kantenleiste 1 mit einem Übergangsabschnitt 5 kann dann mittels spanender Bearbeitung des Kantenbands, beispielsweise durch Fräsen, durch thermische Behandlung mit einem Laser oder mit einem Medienstrahl, insbesondere einem Wasserstrahl, erhalten werden. Alternativ kann ein Übergangsabschnitt 5 auch in das Kantenband eingeprägt werden. Für das Aufbringen eines Dekors 8 sowie die weiteren Schritte sei auf die Ausführungen zu der Ausgestaltung nach Figur 4 verwiesen.

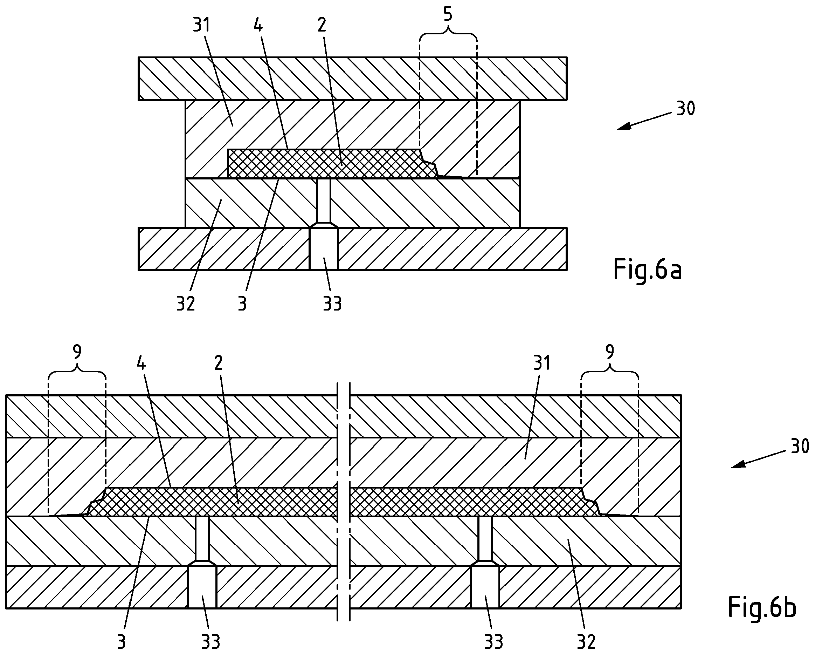

Die Figuren 6a und 6b zeigen eine weitere Ausgestaltung des erfindungsgemäßen Verfahrens, in der der Grundkörper 2 umfassend eine Unterseite 3 sowie Oberseite 4 und einen Übergangsabschnitt 5 durch Spritzguss geformt wird. Der in Figur 6a gezeigte Übergangsabschnitt 5 weist dabei zwei Stufen mit einem nasenförmigen Überstand auf. Für den Übergangsabschnitt 5 gilt das zum Übergangsabschnitt 5 in Figur 4 Gesagte entsprechend.

In der in den Figuren 6a und 6b gezeigten Alternative des erfindungsgemäßen Verfahrens wird über eine oder mehrere Einspritzdüse(n) 33 ein Kunststoff in das aus den Teilformen 31 und 32 bestehende Werkzeug 30 eingespritzt. Nachdem der Kunststoff in der Form weit genug abgekühlt ist, wird der so erhaltene Grundkörper 2 aus dem Werkzeug 30 ausgeworfen. Anschließend wird ein Dekor und gegebenenfalls ein Glanz aufgebracht wie vorstehend für Figur 4 beschrieben (nicht gezeigt). Dadurch wird Kantenleiste 1 erhalten.

Figur 6a zeigt dabei einen Querschnitt durch das Spritzgusswerkzeug 30, wobei die Schnittebene so verläuft, dass die Längsrichtung des Grundkörpers 2 senkrecht auf der Schnittebene steht. Figur 6b zeigt einen anderen Querschnitt durch dasselbe Spritzgusswerkzeug 30, wobei die Schnittebene senkrecht zur Schnittebene von Figur 6a und gleichzeitig senkrecht zur Oberfläche 4 des Grundkörpers 2 verläuft. In Figur 6b ist ebenfalls zu sehen, dass die Oberseite 4 des Grundkörpers 2 an den Enden in Längsrichtung des Grundkörpers 2 ebenfalls zum Rand hin stufenförmig abfällt und dadurch den stufenförmigen Abschluss 9 bildet. Die Form des stufenförmigen Abschluss 9 ist dabei genauso wie die Form des Übergangsabschnitts 5.

Die Prägewalze 21, die in Prägevorrichtung 20 eingesetzt wird, kann verschiedenartig ausgestaltet sein. Den verschiedenen Ausgestaltungen ist gemein, dass sie eine auf der Walzenoberfläche verlaufende erhabene Rippenstruktur aufweisen. Die Rippenstruktur weist eine Rippenhöhe und einen stufenförmigen Querschnitt auf, der auf mindestens einer Seite der Rippenstruktur mindestens zwei Stufen mit jeweils einer oberseitigen Fläche und einer randseitigen Fläche pro Stufe aufweist, wobei die oberseitigen Flächen unabhängig voneinander bezüglich der Walzenoberfläche so ausgerichtet sind, dass die kleinsten Winkel der oberseitigen Flächen bezüglich der Walzenoberfläche jeweils im Mittel von -45° bis 75°, insbesondere von -45° bis 45°, betragen und wobei die randseitigen Flächen unabhängig voneinander bezüglich der Walzenoberfläche so geneigt sind, dass die kleinsten Winkel der randseitigen Flächen bezüglich der Walzenoberfläche im Mittel von 20° bis weniger 90°, insbesondere von 46° bis weniger 90°, insbesondere bis 80°, betragen. Die Anzahl der erhabenen Rippenstrukturen mit stufenförmigem Querschnitt entspricht dabei der Anzahl an Stufenrillen, die in ein Band eingeprägt werden sollen.

Um auch Geradrillen in ein Band einprägen zu können, kann die Prägewalze entsprechend zusätzlich auch erhabene Rippenstrukturen mit geradem Querschnitt aufweisen. Die Anzahl der Rippenstrukturen mit geradem Querschnitt entspricht dabei der Anzahl an Geradrillen, die in das Band eingeprägt werden sollen.

Figur 7 zeigt beispielhaft eine Prägewalze 21", die zusätzlich einen Messerkragen 24 sowie Prägeelemente 25 aufweist. Der Messerkragen 24 ist dabei mittig in Umfangsrichtung auf der Rippenstruktur 22 angeordnet. Aufgrund des Messerkragens 24 weist die Rippenstruktur 22 insgesamt eine Höhe von mindestens 90% des Walzspalts auf. In Figur 7 ist die Rippenhöhe so gewählt, dass ein mit der Walze geprägtes Werkstück, beispielsweise ein Band, an der tiefsten Einprägung eine Dicke von 50 µm aufweist. Der Messerkragen 24 ist jedoch nicht erforderlich. Die Rippenstruktur 22 der Prägewalze 21" weist auf beiden Seiten einen stufenförmigen Querschnitt 23 auf, der in Figur 7 aber nur auf einer Seite markiert ist. Der stufenförmige Querschnitt der Rippenstruktur 22 ist auf beiden Seiten identisch und entspricht dem stufenförmigen Querschnitt 23. In Figur 7 weist die Rippenstruktur mit stufenförmigem Querschnitt der Prägewalze 21" beispielhaft zwei Stufen auf. Denkbar ist es jedoch auch, dass die Rippenstruktur mit stufenförmigem Querschnitt der Prägewalze 21" mehr Stufen aufweist. Ferner kann die Prägewalze wie vorstehend für Figur 5a beschrieben ausgestaltet sein.

Die in Figur 7 dargestellte Prägewalze 21" weist zusätzlich Prägeelemente 25 auf. Mit den Prägeelementen 25 kann eine Struktur in ein Werkstück, beispielsweise ein Band, im selben Arbeitsschritt eingeprägt werden, in dem auch eine Stufenrille eingeprägt wird.

## Patentansprüche

1. Kantenleiste (1, 1') für Möbelstücke, umfassend einen Grundkörper (2) mit einer an ein Möbelstück anlegbaren Unterseite (3) und einer von der Unterseite (3) abgewandten Oberseite (4), wobei die Oberseite (4) zumindest einen zu einem Rand des Grundkörpers (2) hin abfallenden Übergangsabschnitt (5) aufweist, wobei der Übergangsabschnitt (5) stufenförmig zum Rand des Grundkörpers (2) abfällt, wobei der Übergangsabschnitt (5) mindestens zwei Stufen mit einer oberseitigen Fläche (6, 6a) und einer randseitigen Fläche (7) pro Stufe aufweist, wobei die oberseitigen Flächen (6, 6a) unabhängig voneinander bezüglich der Unterseite (3) so ausgerichtet sind, dass die kleinsten Winkel der oberseitigen Flächen (6, 6a) bezüglich der Unterseite (3) jeweils im Mittel von -45° bis 75°, insbesondere von -45° bis 45°, betragen, und wobei die randseitigen Flächen (7) unabhängig voneinander bezüglich der Unterseite (3) so geneigt sind, dass die kleinsten Winkel der randseitigen Flächen (7) bezüglich der Unterseite (3) jeweils im Mittel von 20° bis weniger 90°, insbesondere von 46° bis weniger 90°, insbesondere bis 80°, betragen, **dadurch gekennzeichnet, dass** die Breite des Übergangsabschnitts (5) 0,1 bis 30% der Gesamtbreite der Oberseite (4) beträgt.

2. Kantenleiste (1, 1') gemäß Anspruch 1, **dadurch gekennzeichnet, dass** der Übergangsabschnitt (5) mindestens fünf Stufen, insbesondere mindestens zwanzig Stufen oder mindestens fünfzig Stufen oder mindestens achtzig Stufen oder mindestens hundert Stufen, aufweist.

3. Kantenleiste (1, 1') gemäß einem der Ansprüche 1 oder 2, **dadurch gekennzeichnet, dass** der Grundkörper (2) eine Breite von 9 bis 150 mm, insbesondere von 9 bis 100 mm oder von 9 bis 85 mm oder von 16 bis 60 mm aufweist.

4. Kantenleiste (1, 1') gemäß einem der vorstehenden Ansprüche, **dadurch gekennzeichnet, dass** der Grundkörper (2) der Kantenleiste (1, 1') mindestens ein Material umfasst oder daraus besteht, das mindestens einen Kunststoff umfasst, wobei der Kunststoff insbesondere aus der Gruppe bestehend aus Acrylnitril-Butadien-Styrol-Copolymer, Polyethylen, vernetztes Polyethylen (PE-X), Polypropylen, Polyamid, Polyvinylchlorid, Polycarbonat, Styrolbutadien, Polyethylenterephthalat, Polymethylmetacrylat, wood-plastic-composite (WPC) und Mischungen davon, ausgewählt ist.

5. Kantenleiste (1, 1') gemäß einem der vorstehenden Ansprüche, **dadurch gekennzeichnet, dass** der Grundkörper (2) der Kantenleiste (1, 1') mehrere, insbesondere zwei oder drei, Schichten umfasst.

6. Kantenleiste (1, 1') gemäß Anspruch 5, **dadurch gekennzeichnet, dass** die Schichten verschiedene Materialien enthalten und/oder der Grundkörper (2) durch Coextrusion erhältlich ist.

7. Kantenleiste (1, 1') gemäß einem der vorstehenden Ansprüche, **dadurch gekennzeichnet, dass** die erste Stufe des Übergangsabschnitts (5) am Rand der Kantenleiste (1, 1') beginnt und wobei die erste Stufe eine größere Breite aufweist als die nachfolgende(n) Stufe(n), insbesondere einen nasenförmigen Vorsprung bildet.

8. Kantenleiste (1, 1') gemäß einem der vorstehenden Ansprüche, **dadurch gekennzeichnet, dass** die Stufen des Übergangsabschnitts (5) eine gewellte Form aufweisen.

9. Kantenleiste (1, 1') gemäß einem der vorstehenden Ansprüche, **dadurch gekennzeichnet, dass** die Stufen des Übergangsabschnitts (5) eine gezackte Form aufweisen.

10. Kantenleiste (1, 1') gemäß einem der vorstehenden Ansprüche, **dadurch gekennzeichnet, dass** sich die oberseitige Fläche (6a) der ersten Stufe bis zum Rand des Grundkörpers (2) erstreckt, wobei die Länge der oberseitigen Flächen (6, 6a) der Stufen identisch ist und durch die Länge der Kantenleiste (1, 1') vorgegeben ist und wobei die oberseitige Fläche (6a) der ersten Stufe eine größere Breite aufweist, als die oberseitige Fläche (6) der nachfolgenden Stufe und/oder der nachfolgenden Stufen, insbesondere dass die Breite der oberseitigen Fläche (6a) der ersten Stufe mindestens zweimal größer, insbesondere mindestens dreimal größer, ist als die Breite der oberseitigen Fläche (6) der nachfolgenden Stufe und/oder der nachfolgenden Stufen und insbesondere 0,1 bis 30 mm oder 0,1 bis 15 mm oder 0,1 bis 10 mm oder 0,1 bis 5 mm oder 0,25 bis 4 mm oder 0,3 bis 3 mm beträgt und/oder die Breite der oberseitigen Fläche (6) der auf die erste Stufe folgende Stufe und/oder der auf die erste Stufe folgenden Stufen von 0,01 bis 1 mm, insbesondere von 0,01 bis 0,5 mm oder von 0,01 bis 0,2 mm, beträgt und/oder dass der Grundkörper (2) am Übergang von der oberseitigen Fläche (6a) der ersten Stufe zur randseitigen Fläche (7) der ersten Stufe eine Dicke von 0,01 bis 3 mm, insbesondere von 0,05 bis 1 mm oder von 0,05 bis 0,3 mm aufweist.

11. Verfahren zur Herstellung einer Kantenleiste (1, 1') gemäß einem der Ansprüche 1 bis 10, bei dem der Grundkörper (2) umfassend eine Unterseite (3) und eine Oberseite (4) mit einem Übergangsabschnitt (5) aus mindestens einem Material geformt wird.

12. Verfahren gemäß Anspruch 11, **dadurch gekennzeichnet, dass** das Verfahren einen Extrusionsschritt, insbesondere einen Coextrusionsschritt, umfasst und/oder der Grundkörper (2) durch Profilextrusion des mindestens einen Materials geformt wird oder der Grundkörper (2) durch Spritzguss geformt wird.

13. Verfahren gemäß einem der Ansprüche 11 oder 12, umfassend die Schritte
a. Herstellen, insbesondere mittels Extrusion oder Coextrusion, eines Bands (100) aus dem mindestens einen Material mit einer Dicke, einer Längsrichtung (L), einer oberen Fläche (104) und einer unteren Fläche (103),
b. Einbringen, insbesondere Einprägen, mindestens einer Stufenrille (105) in die obere Fläche (104) des Bands (100) wodurch ein gerilltes Band (101) erhalten wird,
c. Auftrennen, insbesondere Schneiden oder Reißen, des gerillten Bands (101) in Längsrichtung (L), wodurch mindestens ein Grundkörper (2) geformt wird,
wobei
die Stufenrille (105) eine Stufenrillentiefe und einen stufenförmigen Querschnitt aufweist, der auf mindestens einer Seite der Stufenrille (105) mindestens zwei Stufen, mit jeweils einer oberseitigen Fläche (106, 106a) und einer randseitigen Fläche (107) pro Stufe, aufweist, wobei die oberseitigen Flächen (106, 106a) unabhängig voneinander bezüglich der Unterseite (103) so ausgerichtet sind, dass die kleinsten Winkel der oberseitigen Flächen (106, 106a) bezüglich der Unterseite (103) jeweils im Mittel von -45° bis 75°, insbesondere von -45° bis 45°, betragen, und wobei die randseitigen Flächen (107) unabhängig voneinander bezüglich der Unterseite (103) so geneigt sind, dass die kleinsten Winkel der randseitigen Flächen (107) bezüglich der Unterseite (103) jeweils im Mittel von 20° bis weniger 90°, insbesondere von 46° bis weniger 90°, insbesondere bis 80°, betragen und wobei die Stufenrillentiefe mindestens 70%, insbesondere mindestens 80%, der Dicke des Bands (100) beträgt.

14. Verfahren gemäß einem der Ansprüche 11 bis 13, **dadurch gekennzeichnet, dass** jeweils mindestens zwei, mindestens fünf, mindestens zehn oder mindestens fünfzehn Stufenrillen (105) in das Band (100) eingebracht werden und/oder dass das Material bei der Herstellung der Kantenleiste (1, 1') mit Stufen mit zackiger Form nach dem Formen beim Erkalten unterhalb seiner Vicat Erweichungstemperatur eine gewellte Form einnimmt, um Stufen mit gewellter Form zu produzieren.

15. Verfahren gemäß einem der Ansprüche 11 bis 14, **dadurch gekennzeichnet, dass** zunächst ein Kantenband extrudiert wird, in das mittels spanender Bearbeitung, insbesondere mittels Fräsen, thermischer Behandlung mit einem Laserstrahl, mit einem Medienstrahl wie einem Wasserstrahl, oder mittels Prägen ein Übergangsabschnitt (5) eingearbeitet wird, so dass ein Grundkörper (2) geformt wird.

## Claims

1. Edge strip (1, 1') for pieces of furniture, comprising a main body (2) having a lower face (3) that can be placed against a piece of furniture and an upper face (4) facing away from the lower face (3), wherein the upper face (4) has at least one transition portion (5) sloping toward an edge of the main body (2), wherein the transition portion (5) slopes in a step-like manner toward the edge of the main body (2), wherein the transition portion (5) has at least two steps with one upper surface (6, 6a) and one edge surface (7) per step, wherein the upper surfaces (6, 6a) are oriented, independently of one another, with respect to the lower face (3) such that the smallest angles of the upper surfaces (6, 6a) with respect to the lower face (3) are each on average from -45° to 75°, in particular from -45° to 45°, and wherein the edge surfaces (7) are inclined, independently of one another, with respect to the lower face (3) such that the smallest angles of the edge surfaces (7) with respect to the lower face(3) are each on average from 20° to less than 90°, in particular from 46° to less than 90°, in particular up to 80°, **characterized in that** the width of the transition portion (5) is 0.1 to 30% of the total width of the upper face (4).

2. Edge strip (1, 1') according to claim 1, **characterized in that** the transition portion (5) has at least five steps, in particular at least twenty steps or at least fifty steps or at least eighty steps or at least one hundred steps.

3. Edge strip (1, 1') according to either claim 1 or claim 2,
**characterized in that** the main body (2) has a width of 9 to 150 mm, in particular of 9 to 100 mm or of 9 to 85 mm or of 16 to 60 mm.

4. Edge strip (1, 1') according to any of the preceding claims,
**characterized in that** the main body (2) of the edge strip (1, 1') comprises or consists of at least one material which comprises at least one plastics material, wherein the plastics material is selected in particular from the group consisting of acrylonitrile-butadiene-styrene copolymer, polyethylene, cross-linked polyethylene (PE-X), polypropylene, polyamide, polyvinyl chloride, polycarbonate, styrenebutadiene, polyethylene terephthalate, polymethyl methacrylate, wood-plastic composite (WPC) and mixtures thereof.

5. Edge strip (1, 1') according to any of the preceding claims,
**characterized in that** the main body (2) of the edge strip (1, 1') comprises a plurality of, in particular two or three, layers.

6. Edge strip (1, 1') according to claim 5, **characterized in that** the layers contain different materials and/or the main body (2) is obtainable by coextrusion.

7. Edge strip (1, 1') according to any of the preceding claims,
**characterized in that** the first step of the transition portion (5) begins at the edge of the edge strip (1, 1') and wherein the first step has a greater width than the subsequent step(s), in particular forms a nose-shaped projection.

8. Edge strip (1, 1') according to any of the preceding claims,
**characterized in that** the steps of the transition portion (5) have a wavy shape.

9. Edge strip (1, 1') according to any of the preceding claims,
**characterized in that** the steps of the transition portion (5) have a jagged shape.

10. Edge strip (1, 1') according to any of the preceding claims,
**characterized in that** the upper surface (6a) of the first step extends to the edge of the main body (2), wherein the length of the upper surfaces (6, 6a) of the steps is identical and is predetermined by the length of the edge strip (1, 1') and wherein the upper surface (6a) of the first step has a greater width than the upper surface (6) of the subsequent step and/or the subsequent steps, in particular **in that** the width of the upper surface (6a) of the first step is at least twice as great, in particular at least three times as great, as the width of the upper surface (6) of the subsequent step and/or the subsequent steps and in particular is 0.1 to 30 mm or 0.1 to 15 mm or 0.1 to 10 mm or 0.1 to 5 mm or 0.25 to 4 mm or 0.3 to 3 mm and/or the width of the upper surface (6) of the step following the first step and/or the steps following the first step is from 0.01 to 1 mm, in particular from 0.01 to 0.5 mm or from 0.01 to 0.2 mm and/or **in that** the main body (2) has a thickness of from 0.01 to 3 mm, in particular from 0.05 to 1 mm or from 0.05 to 0.3 mm, at the transition from the upper surface (6a) of the first step to the edge surface (7) of the first step.

11. Method for producing an edge strip (1, 1') according to any of claims 1 to 10, in which the main body (2) comprising a lower face (3) and an upper face (4) with a transition portion (5) is formed from at least one material.

12. Method according to claim 11, **characterized in that** the method comprises an extrusion step, in particular a coextrusion step, and/or the main body (2) is formed by profile extrusion of the at least one material or the main body (2) is formed by injection molding.

13. Method according to either claim 11 or claim 12, comprising the steps of
a. producing, in particular by extrusion or coextrusion, a strip (100) from the at least one material having a thickness, a longitudinal direction (L), an upper surface (104) and a lower surface (103),
b. introducing, in particular embossing, at least one stepped groove (105) into the upper surface (104) of the strip (100), whereby a grooved strip (101) is obtained,
c. separating, in particular cutting or tearing, the grooved strip (101) in the longitudinal direction (L), whereby at least one main body (2) is formed,
wherein the stepped groove (105) has a stepped groove depth and a stepped cross-section, which has at least two steps on at least one side of the stepped groove (105), each with one upper surface (106, 106a) and one edge surface (107) per step, wherein the upper surfaces (106, 106a) are oriented, independently of one another, with respect to the lower face (103) such that the smallest angles of the upper surfaces (106, 106a) with respect to the lower face (103) are each on average from -45° to 75°, in particular from -45° to 45°, and wherein the edge surfaces (107) are inclined, independently of one another, with respect to the lower face (103) such that the smallest angles of the edge surfaces (107) with respect to the lower face (103) are each on average from 20° to less than 90°, in particular from 46° to less than 90°, in particular up to 80°, and wherein the step groove depth is at least 70%, in particular at least 80%, of the thickness of the strip (100).

14. Method according to one of claims 11 to 13, **characterized in that** at least two, at least five, at least ten or at least fifteen step grooves (105) are introduced into the band (100) and/or **in that** in the production of the edge strip (1, 1') having steps with a jagged shape, the material takes on a wavy shape after forming when cooling below its Vicat softening temperature in order to produce steps having a wavy shape.

15. Method according to any of claims 11 to 14, **characterized in that** first, an edge band is extruded, into which a transition portion (5) is incorporated by means of machining, in particular by means of milling, thermal treatment with a laser beam, with a media jet such as a water jet, or by means of embossing, so that a main body (2) is formed.

## Revendications

1. Bande de chant (1, 1') pour meubles, comprenant un corps de base (2) comportant une face inférieure (3) pouvant être placée contre un meuble et une face supérieure (4) opposée à la face inférieure (3), dans laquelle la face supérieure (4) présente au moins une section de transition (5) s'inclinant vers un bord du corps de base (2), dans laquelle la section de transition (5) s'incline de manière échelonnée vers le bord du corps de base (2), dans laquelle la section de transition (5) présente au moins deux échelons comportant une surface supérieure (6, 6a) et une surface côté bord (7) par échelon, dans laquelle les surfaces supérieures (6, 6a) sont alignées indépendamment l'une de l'autre par rapport à la face inférieure (3) de sorte que les plus petits angles des surfaces supérieures (6, 6a) par rapport à la face inférieure (3) sont respectivement compris dans une plage moyenne allant de -45° à 75°, en particulier de -45° à 45°, et dans laquelle les surfaces côté bord (7) sont inclinées indépendamment l'une de l'autre par rapport à la face inférieure (3) de sorte que les plus petits angles des surfaces côté bord (7) par rapport à la face inférieure (3) sont respectivement compris dans une plage moyenne allant de 20° à moins de 90°, en particulier de 46° à moins de 90°, en particulier jusqu'à 80°, **caractérisée en ce que** la largeur de la section de transition (5) est 0,1 à 30 % de la largeur totale de la face supérieure (4).

2. Bande de chant (1, 1') selon la revendication 1, **caractérisée en ce que** la section de transition (5) présente au moins cinq échelons, en particulier au moins vingt échelons ou au moins cinquante échelons ou au moins quatre-vingt échelons ou au moins cent échelons.

3. Bande de chant (1, 1') selon l'une des revendications 1 ou 2,
**caractérisée en ce que** le corps de base (2) présente une largeur allant de 9 à 150 mm, en particulier de 9 à 100 mm ou de 9 à 85 mm ou de 16 à 60 mm.

4. Bande de chant (1, 1') selon l'une des revendications précédentes,
**caractérisée en ce que** le corps de base (2) de la bande de chant (1, 1') comprend au moins un matériau ou est constitué de celui-ci, lequel matériau comprend au moins une matière plastique, dans laquelle la matière plastique est choisie en particulier dans le groupe constitué de copolymère acrylonitrile-butadiène-styrène, polyéthylène, polyéthylène réticulé (PE-X), polypropylène, polyamide, chlorure de polyvinyle, polycarbonate, styrène butadiène, polyéthylène téréphtalate, polyméthylmétacrylate, composite bois-plastique (WPC) et leurs mélanges.

5. Bande de chant (1, 1') selon l'une des revendications précédentes, **caractérisée en ce que** le corps de base (2) de la bande de chant (1, 1') comprend plusieurs, en particulier deux ou trois, couches.

6. Bande de chant (1, 1') selon la revendication 5, **caractérisée en ce que** les couches contiennent différents matériaux et/ou le corps de base (2) peut être obtenu par coextrusion.

7. Bande de chant (1, 1') selon l'une des revendications précédentes, **caractérisée en ce que** le premier échelon de la section de transition (5) commence au niveau du bord de la bande de chant (1, 1') et dans laquelle le premier échelon présente une largeur supérieure à celle du ou des échelons suivants, en particulier forme une saillie en forme d'ergot.

8. Bande de chant (1, 1') selon l'une des revendications précédentes,
**caractérisée en ce que** les échelons de la section de transition (5) présentent une forme ondulée.

9. Bande de chant (1, 1') selon l'une des revendications précédentes,
**caractérisée en ce que** les échelons de la section de transition (5) présentent une forme dentelée.

10. Bande de chant (1, 1') selon l'une des revendications précédentes, **caractérisée en ce que** la surface supérieure (6a) du premier échelon s'étend jusqu'au bord du corps de base (2), dans laquelle la longueur des surfaces supérieures (6, 6a) des échelons est identique et est prédéfinie par la longueur de la bande de chant (1, 1') et dans laquelle la surface supérieure (6a) du premier échelon présente une largeur supérieure à celle de la surface supérieure (6) de l'échelon suivant et/ou des échelons suivants, en particulier **en ce que** la largeur de la surface supérieure (6a) du premier échelon est au moins deux fois supérieure, en particulier au moins trois fois supérieure, à la largeur de la surface supérieure (6) de l'échelon suivant et/ou des échelons suivants et va en particulier de 0,1 à 30 mm ou de 0,1 à 15 mm ou de 0,1 à 10 mm ou de 0,1 à 5 mm ou de 0,25 à 4 mm ou de 0,3 à 3 mm et/ou la largeur de la surface supérieure (6) de l'échelon suivant le premier échelon et/ou des échelons suivant le premier échelon va de 0,01 à 1 mm, en particulier de 0,01 à 0,5 mm ou de 0,01 à 0,2 mm **et/ou en ce que** le corps de base (2) présente, au niveau de la transition entre la surface supérieure (6a) du premier échelon et la surface côté bord (7) du premier échelon, une épaisseur allant de 0,01 à 3 mm, en particulier de 0,05 à 1 mm ou de 0,05 à 0,3 mm.

11. Procédé pour la fabrication d'une bande de chant (1, 1') selon l'une des revendications 1 à 10, dans lequel le corps de base (2) comprenant une face inférieure (3) et une face supérieure (4) comportant une section de transition (5) est formé à partir d'au moins un matériau.

12. Procédé selon la revendication 11, **caractérisé en ce que** le procédé comprend une étape d'extrusion, en particulier une étape de coextrusion, et/ou le corps de base (2) est formé par extrusion de profilé de l'au moins un matériau ou le corps de base (2) est formé par moulage par injection.

13. Procédé selon l'une des revendications 11 ou 12, comprenant les étapes consistant à
a. fabriquer, en particulier par extrusion ou coextrusion, une bande (100) à partir de l'au moins un matériau comportant une épaisseur, une direction longitudinale (L), une surface supérieure (104) et une surface inférieure (103),
b. introduire, en particulier gaufrer, au moins une rainure d'échelon (105) dans la surface supérieure (104) de la bande (100), moyennant quoi une bande rainurée (101) est obtenue,
c. séparer, en particulier découper ou fendre, la bande rainurée (101) dans la direction longitudinale (L), moyennant quoi au moins un corps de base (2) est formé,
dans lequel la rainure d'échelon (105) présente une profondeur de rainure d'échelon et une section transversale échelonnée qui présente, sur au moins un côté de la rainure d'échelon (105), au moins deux échelons comportant respectivement une surface supérieure (106, 106a) et une surface côté bord (107) par échelon, dans lequel les surfaces supérieures (106, 106a) sont alignées indépendamment l'une de l'autre par rapport à la face inférieure (103) de sorte que les plus petits angles des surfaces supérieures (106, 106a) par rapport à la face inférieure (103) sont respectivement compris dans une plage moyenne allant de -45° à 75°, en particulier de -45° à 45°, et dans lequel les surfaces côté bord (107) sont inclinées indépendamment l'une de l'autre par rapport à la face inférieure (103) de sorte que les plus petits angles des surfaces côté bord (107) par rapport à la face inférieure (103) sont respectivement compris dans une plage moyenne allant de 20° à 90°, en particulier de 46° à moins de 90°, en particulier jusqu'à 80°, et dans lequel la profondeur de rainure d'échelon est d'au moins 70 %, en particulier d'au moins 80 %, de l'épaisseur de la bande (100).

14. Procédé selon l'une des revendications 11 à 13, **caractérisé en ce que** respectivement au moins deux, au moins cinq, au moins dix ou au moins quinze rainures d'échelon (105) sont introduites dans la bande (100) **et/ou en ce que,** lors de la fabrication de la bande de chant (1, 1') avec des échelons de forme dentelée, le matériau prend une forme ondulée après le moulage lors du refroidissement en dessous de sa température de ramollissement Vicat, afin de produire des échelons de forme ondulée.

15. Procédé selon l'une des revendications 11 à 14, **caractérisé en ce qu'**une bande de chant est d'abord extrudée, dans laquelle une section de transition (5) est travaillée par usinage par enlèvement de copeaux, en particulier par fraisage, par traitement thermique au moyen d'un faisceau laser, d'un jet de fluide tel qu'un jet d'eau, ou par gaufrage, de sorte qu'un corps de base (2) est formé.
